# EUROPÄISCHE PATENTSCHRIFT

(11) **EP 2 116 104 B1**
(45) Veröffentlichungstag und Bekanntmachung des Hinweises auf die Patenterteilung: **29.05.2013**
(21) Anmeldenummer: 08707703.8
(22) Anmeldetag: 13.02.2008
(51) Int. Cl.: H05B 6/02

(54) **QUERFELDSCHRUMPFVORRICHTUNG MIT MITTELN ZUR BEGRENZUNG VON MAGNETFLUSSVERLUSTEN**
CROSS-FIELD SHRINK-FIT DEVICE WITH MEANS FOR LIMITING MAGNETIC FLUX LOSSES
DISPOSITIF DE RETRAIT DE CHAMP TRANSVERSAL COMPRENANT DES MOYENS PERMETTANT DE LIMITER LES PERTES DE FLUX MAGNÉTIQUE

(30) Priorität: 16.02.2007 DE 202007002511 U; 04.07.2007 DE 202007009403 U
(43) Veröffentlichungstag der Anmeldung: 11.11.2009
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Bockhorni & Kollegen
(86) Internationale Anmeldenummer: PCT/EP2008/001096
(87) Internationale Veröffentlichungsnummer: WO 2008/098752

(56) Entgegenhaltungen:
- EP-A- 1 519 632
- DE-A1-102005 005 892
- US-A1- 2003 168 445

## Beschreibung

Die Erfindung betrifft eine Vorrichtung zum induktiven Erwärmen eines relativ zu einer Achse symmetrischen Bauteilabschnitts aus elektrisch leitendem Material, insbesondere eines zu einem Werkzeugspannfutter gehörenden Hülsenabschnitts mit einer Aufnahmeöffnung zum Halten eines Werkzeugs durch Pressverbund.

Es ist allgemein bekannt, Bauteile, insbesondere solche Bauteile, die relativ zu einer Achse rotationssymmetrisch sind, mittels induktiv erzeugter Wirbelströme zu erwärmen - beispielsweise zum Anlassen, Tempern oder Oberflächenhärten des Bauteils. Ebenfalls ist es bekannt, den Schrumpfverband eines eine Welle oder einen Schaft im Presssitz umschließenden Hülsenteils, beispielsweise eines Lagerrings, induktiv zu erwärmen und damit so weit aufzuweiten, dass der Hülsenteil von der Welle gelöst werden kann.

Schließlich ist es auch bekannt, den zylindrischen Schaft eines rotierend anzutreibenden Werkzeugs, beispielsweise eines Bohrers oder Fräsers, in eine im Wesentlichen zylindrische Aufnahmeöffnung einzuschrumpfen, die zu diesem Zweck im Regelfall in einer Partie des Werkzeughalters vorgesehen ist, die als Hülsenabschnitt bezeichnet werden kann. Dieser Werkzeughalter kann integraler Bestandteil einer Maschinenspindel sein. Er kann andererseits aber auch einen Kupplungsabschnitt aufweisen, beispielsweise in Form eines konischen Endabschnitts, mit dem er an der Arbeitsspindel befestigt wird.

Um den Schaft einschrumpfen zu können, d. h. einen Pressverbund zwischen dem Hülsenabschnitt des Werkzeughalters und dem Werkzeugschaft herstellen zu können, hat der Innendurchmesser der Aufnahmeöffnung bezogen auf den Schaftdurchmesser der erfindungsgemäß einzuspannenden Werkzeuge Untermaß. Zum Einsetzen oder Entnehmen des Werkzeugschafts wird der Hülsenabschnitt erwärmt, bis der Innendurchmesser der Aufnahmeöffnung temperaturbedingt so weit aufgedehnt ist, dass der Werkzeugschaft eingesetzt oder entnommen werden kann. Nach dem Erkalten ist zwischen dem Hülsenteil und dem Werkzeugschaft ein Pressverbund gegeben.

Eine Vorrichtung zum Lösen und Herstellen eines Pressverbunds zwischen einem Werkzeughalter und einem Werkzeugschaft ist aus dem deutschen Gebrauchsmuster 200 08 675 bekannt. Diese, ebenfalls induktiv arbeitende, jedoch vom Grundsatz her einem anderen Prinzip folgende Vorrichtung nutzt ein Längsfeld. Die Vorrichtung ist so ausgestaltet, dass der zu erwärmende Hülsenabschnitt des Werkzeughalters in das Zentrum einer ihn kreisförmig umgebenden Induktionsspule eingebracht wird. Dabei wird der Hülsenabschnitt dadurch im erforderlichen Maß mit dem wirbelstrominduzierenden Magnetfeld beaufschlagt, dass die Induktionsspule an ihrer dem freien Ende der Hülsenpartie benachbarten Stirnseite von einem eine zentrale Durchtrittsöffnung für das Werkzeug aufweisenden Polschuh aus magnetisch leitendem und elektrisch nicht leitendem Werkstoff übergriffen ist. Dieser Polschuh weist eine zentrale Öffnung für den Durchtritt des Werkzeugs auf, die so bemessen ist, dass das Werkzeug durch diese Öffnung hindurchtreten kann, andererseits aber der Polschuh im Bereich dieser Öffnung auch am Hülsenabschnitt des Werkzeughalters anliegt.

Nun sind in der Praxis mit einer solchen Vorrichtung Werkzeughalter sehr unterschiedlicher Größen zu bearbeiten, nämlich Werkzeughalter zum Spannen von Werkzeugen mit einem großen Schaftdurchmesser, die einen entsprechend großen Durchmesser im Bereich der Hülsenpartie aufweisen. Andererseits sind auch Werkzeuge zu bearbeiten, die zum Spannen von Werkzeugen mit sehr kleinen Schaftdurchmessern dienen. Diese Werkzeughalter zeichnen sich dadurch aus, dass sie einen Hülsenabschnitt mit einem sehr kleinen Durchmesser aufweisen. Daraus ergibt sich, dass zur der vorbekannten Vorrichtung ein Satz verschiedenartiger Polschuhe gehört und, um einen bestimmten Werkzeughalter zu bearbeiten, ein geeignet passender Polschuh ausgewählt werden muss. Diese Notwendigkeit, den Polschuh auszuwechseln, beeinträchtigt jedoch zum einen die Möglichkeit, eine solche Vorrichtung automatisiert zu betreiben. Zum anderen kostet, auch wenn die Vorrichtung manuell betrieben wird, das Auswechseln der Polschuhe jeweils Zeit und stellt vor allem auch eine nicht unbeträchtliche Fehlerquelle dar, jedenfalls dann, wenn die Vorrichtung von angelerntem Personal bedient werden soll. Wenn nämlich aus Unachtsamkeit oder Faulheit nicht der richtige Polschuh für den konkret zu behandelnden Werkzeughalter ausgewählt wird, funktioniert entweder das Ein- oder Ausspannen nicht, oder aber, schlimmer, der Werkzeughalter und/oder das Werkzeug werden womöglich überhitzt und damit unbrauchbar.

Um die Schwierigkeiten einer solchen Konstruktion zu überwinden, ist deswegen bereits eine ebenfalls induktiv arbeitende, aber spulenseitig ein ganz anderes Prinzip verfolgende Vorrichtung vorgeschlagen worden. Die entsprechende Patentanmeldung wurde unter der Nr. WO 2006/084678 A1 veröffentlicht. Diese Vorrichtung arbeitet nach dem sog. Querfeldprinzip und wird in der Praxis dementsprechend auch Querfeldspuleneinheit genannt. Die Vorrichtung besteht aus einem vom Grundsatz her im Wesentlichen rotationssymmetrischen Gehäuse, die einen kreiszylindrischen Hohlraum umgibt. In diesen Hohlraum wird der zu erwärmende Hülsenabschnitt eingeschoben. Es sind Polstücke vorhanden, die in radialer Richtung, hin auf den Hülsenabschnitt, beweglich sind. Auf jedem Polstück reitet eine mit Wechselstrom speisbare Spule zur Erzeugung eines entsprechenden magnetischen Flusses in dem betreffenden Polstück. Dabei sind die Spulen so geschaltet, dass der magnetische Fluss von in Umfangsrichtung gesehen benachbarten Polstücken entgegengesetzte Richtung hat.

Um die Anlage in Betrieb zu nehmen, werden die Polstücke i. d. R. soweit in radialer Richtung nach innen gefahren, bis sie an dem zu erwärmenden Hülsenabschnitt anliegen. Prinzipbedingt ist keine Abschirmung des aus der zu erwärmenden Hülsenpartie herausragenden Werkzeugschafts erforderlich, womit die Notwendigkeit unterschiedlicher Polschuhe entfällt.

Unzulänglichkeiten bei dieser Vorrichtung bestehen allerdings insoweit, als dass die Polstücke zwar an die unterschiedlichsten Hülsenpartien zur Anlage gebracht werden können, die Anlage aber bei weitem nicht in allen Fällen optimal ist. Das heißt, dass entweder in diversen Fällen das Potential der Anlage nicht optimal ausgeschöpft werden kann bzw., zumindest in extremeren Fällen die Polstücke gewechselt werden müssen bzw. komplizierte Polschuhe mit in sich beweglichen Teilabschnitten einzusetzen sind, um so einen verbesserten Kontakt zu ermöglichen - so etwa Polstücke, die segmentweise verschiebbar sind, entfernt ähnlich wie die Zuhaltestifte eines Sicherheitsschlosses.

Zumindest unter gewissen Umständen (nämlich in Abhängigkeit davon, wie weit die Polstücke in radialer Richtung zusammengefahren werden müssen, um die betreffende Hülsenpartie zu treffen) kann es bei dieser Vorrichtung zu magnetischen Kurzschlüssen zwischen benachbarten Polstücken oder einem Polstück und dem Gehäuse kommen.

Es ist daher die Aufgabe der Erfindung, eine Vorrichtung zu schaffen, die mit einfachen Mitteln einen verbesserten Kontakt zwischen den Polstücken und insbesondere den verschiedenen Hülsenabschnitten der diversen unterschiedlichen mit der Vorrichtung zu erwärmenden Werkzeughalter ermöglicht und bei der insbesondere die Verluste durch magnetische Kurzschlüsse zwischen den Polstücken untereinander und/oder einem Polstück und dem es lagernden Gehäuse zumindest verringert werden.

Diese Aufgabe wird mit den Merkmalen des Anspruchs 1 gelöst.

Erfindungsgemäß ist vorgesehen, dass die Polstücke jeweils um eine im Wesentlichen parallel zu der Symmetrieachse des zu erwärmenden Bauteilabschnitts verlaufende Achse (die Zustelldrehachse) drehbar an der Vorrichtung gelagert sind, derart, dass jedes der Polstücke durch eine Drehung um die ihm zugeordnete Zustell-drehachse in Richtung auf den zu erwärmenden Oberflächenbereich des individuellen Werkstücks zugestellt werden kann.

Weiterhin ist es vorteilhaft, dass die Vorrichtung Mittel zur Herabsetzung unerwünschten Kurzschluss-Magnetflusses zwischen benachbarten Polstücken und/oder einem Polstück und dem Gehäuse aufweist und diese Mittel darin bestehen, dass nur ein Teil der an der Vorrichtung vorhandenen Polstücke gleichzeitig mit Strom beaufschlagt wird und/oder das Gehäuse zwischen Lagestellen benachbarter Polstücke derart in radial auswärtiger Richtung ausgebuchtet ist, sodass die Luftstrecke zwischen dem dieser Ausbuchtung zugeordneten Polstück und dem ausgebuchteten Abschnitt der Gehäusewand vergrößert ist.

Anders als bei der bekannten Querfeld-Spuleneinheit ist die Vorrichtung auf diese Art und Weise nicht darauf beschränkt, stets nur ein- und dieselben, schmalen und in ihrer Kontur im Wesentlichen festgelegten Stirnflächen der Polstücke dem jeweiligen zu erwärmenden Hülsenabschnitt anzunähern, bzw. mit ihm in Kontakt zu bringen. Vielmehr steht auf diese Art und Weise die wesentlich größere Flankenfläche der Polstücke zur Verfügung, ohne eine nur umständlich zu bewerkstelligende Verschiebebewegung der Polstücke vorsehen zu müssen.

Dadurch kann auf einfache Art und Weise ein verbessertes Zusammenwirken zwischen der Oberfläche der zu erwärmenden Hülsenabschnitte und den Polstücken erreicht werden, gleich, ob die Polstücke (im Regelfall) an dem jeweiligen Hülsenabschnitt zur Anlage kommen oder diesen nur dicht angenähert werden. Soweit die Polstücke zur Anlage an der Oberfläche des zu erwärmenden Hülsenabschnitts vorgesehen sind, lassen sich zudem bei einer derartigen Gestaltung sehr einfach weitere Maßnahmen zur Verbesserung des Anliegens treffen.

Die erfindungsgemäße Vorrichtung vermag auf diese Art und Weise diverse zu einer Achse symmetrische Bauteilabschnitte aus elektrisch leitendem Material, wie etwa rotationssymmetrische Achs- oder Wellenabschnitte, im Prinzip aber auch Polygonabschnitte, wie etwa achtkantige Halbzeuge oder dergl., besonders effektiv zu erwärmen - obgleich sich die Vorteile der erfindungsgemäßen Vorrichtung in erster Linie beim Erwärmen von rotationssymmetrischen Bauteilabschnitten wie den Hülsenpartien verschiedenen Werkzeughalter einsetzen lassen.

Bemerkenswert ist noch, dass die Zustelldrehachse nicht in dem Sinne fest im Raum vorgegeben sein muss, dass sich die Polstücke nur um diese Zustellachse drehen lassen. Die Anforderungen, die die Erfindung an die Zustelldrehachse stellt, lassen sich vielmehr auch durch Kugelgelenke oder dergleichen erfüllen, die nur unter anderem eine Drehung der Polstücke um die als Zustelldrehachse definierte Achse herum zulassen, gleichzeitig aber auch noch andere Drehbewegungen zulassen.

Ein entscheidender Vorteil liegt zudem ggf. darin, dass nur ein Teil der an der Vorrichtung vorhandenen Polstücke gleichzeitig aktiv mit Magnetfluss beaufschlagt wird (indem die Spulen, welche den Magnetfluss in diesen Polstücken erzeugen, eingeschaltet sind). Auf diese Art und Weise wird die Luftstrecke zwischen aktiv mit Magnetfluss beaufschlagten Polstücken vergrößert, da zwischen zwei solchen Polstücken i. d. R. ein momentan inaktives Polstück angeordnet ist, d. h. ein Polstück, dessen Spule momentan nicht eingeschaltet ist. Bei gleicher Leistung ergibt sich so ein höherer Wirkungsgrad und damit eine schnellere Erhitzung der zu bearbeitenden Hülsepartie.

Ein entscheidender Vorteil liegt zudem ggf. darin, dass das Gehäuse zwischen Lagerstellen benachbarter Polstücke (im Vergleich zu einem gegenüber dem die Polstücke aufnehmenden Innenraum kreisrunden Gehäuse) derart in radial auswärtiger Richtung (bezogen auf die Symmetrieachse der bestimmungsgemäß in die Vorrichtung eingesetzten Hülsenpartie) ausgebuchtet ist, dass die Luftstrecke zwischen dem dieser Ausbuchtung zugeordneten Polstück und dem ausgebuchteten Abschnitt der Gehäusewand vergrößert ist. Nämlich regelmäßig derart, dass zumindest die Luftstrecke zwischen dem Bereich des Polstücks, der zur Anlage an die verschiedenen zu erhitzenden Werkstücke gedacht ist, und dem Gehäuse so weit vergrößert wird, dass kein wesentlicher Magnetfluss unmittelbar zwischen dem besagten Abschnitt des Polstücks und dem Gehäuse mehr stattfindet. Auch durch diese Maßnahme ergibt sich bei gleicher Leistung ein höherer Wirkungsgrad und damit eine schnellere Erhitzung der zu behandelnden Hülsenpartie. Dies insbesondere bei Vorrichtungen mit schwenk- anstatt radial verschiebbaren Polstücken, die in Folge ihrer durch die Verschwenkung bedingten Lage im Gehäuse in besonderem Maße der Gefahr von Verlusten durch "magnetischen Kurzschluss" unmittelbar zwischen dem Polstück und dem Gehäuse ausgesetzt sind.

Hieran schließt eine besonders bevorzugte Ausgestaltung der Erfindung an. Diese besagt, dass jedes der Polstücke mehrachsig drehbar an der Vorrichtung gelagert ist, derart, dass jedes der Polstücke durch eine Drehung um eine ihm zugeordnete Drehachse an den zu erwärmenden Bauteilabschnitts individuellen Werkstücks zugestellt werden und dann um eine andere ihm jeweils (zusätzlich) zugeordnete Drehachse so geneigt werden kann, dass es sich innig an die Oberfläche des zu erwärmenden Bauteilabschnitts anlegt. Um diese Weiterbildung der Erfindung zu realisieren, sind die bereits angesprochenen Kugelgelenke besonders zweckmäßig. Diese Weiterbildung der Erfindung ist für das Erwärmen von Hülsenabschnitten von Werkzeugspannfuttern von besonderer Bedeutung. Dies deshalb, weil die Hülsenabschnitte von Werkzeugspannfuttern nicht nur stark unterschiedliche Durchmesser haben, sondern zudem eine konische Außenkontur, wobei der Konuswinkel je nach Hersteller und Ausführungsform innerhalb einer gewissen Bandbreite variieren kann.

Eine weitere bevorzugte Ausführungsform der Erfindung sieht vor, dass die Höhe eines Polstücks von seiner Spitze hin, zu seiner Zustelldrehachse hin zunimmt. Die Höhe eines Polstücks in diesem Sinne ist die Erstreckung des Polstücks, das dieses im Wesentlichen parallel zu seiner Zustelldrehachse hat. Hierdurch ist es möglich, dem Umstand Rechnung zu tragen, dass die zu erwärmenden Hülsenabschnitte von Werkzeugspannvorrichtungen, die zum Halten von Werkzeugen mit kleinen Schaftdurchmessern im Schrumpfverbund vorgesehen sind, in Richtung der Symmetrieachse des Hülsenabschnitts wesentlich kürzer sind, als diejenigen von Werkzeugspannfuttern, die zum Halten von Werkzeugen mit großem Schaftdurchmesser dienen.

Bevorzugt ist die erfindungsgemäße Vorrichtung so gestaltet, dass der Bereich der Polstücke, der bestimmungsgemäß an den zu erwärmenden Bauteilabschnitten der verschiedenen Bauteile zur Anlage kommt, konvex gekrümmt ist.

Eine andere bevorzugte Ausgestaltungsform sieht vor, dass der Oberflächenbereich der Polstücke, der bestimmungsgemäß an den zu erwärmenden Hülsenabschnitten der verschiedenen Werkzeugspannfutter zur Anlage kommt, aus einer Anzahl im Wesentlichen in Richtung von der Polstück-Spitze hin zur Zustelldrehachse aneinander gereihter, diskreter Kontaktflächen besteht, von denen jede so angeordnet und gestaltet ist, dass sie in Kontakt mit dem Hülsenabschnitt zumindest eines der bestimmungsgemäß von der Vorrichtung zu erwärmenden, unterschiedlichen Werkzeugspannfutter bringbar ist.

Es ist günstig, die erfindungsgemäße Vorrichtung so zu gestalten, dass die Polstücke in Zustellrichtung um die Zustelldrehachse herum vorgespannt sind, so dass sie sich, sobald sie in gelüfteter Position freigegeben werden, selbsttätig an dem jeweils zu erwärmenden Bauteilabschnitt anlegen. Dies verhindert unbeabsichtigte Bedienungsfehler der Vorrichtung. Die Funktion ist hier die, dass die Polstücke zum Einführen des bestimmungsgemäß zu erwärmenden Bauteilabschnitts um ihre Zustelldrehachse herum gegen die Vorspannung aufgeschwenkt werden, woraufhin der zu erwärmende Bauteilabschnitt in die Vorrichtung eingeführt und bestimmungsgemäß in der Vorrichtung positioniert wird - sobald die die Polstücke manuell oder motorisch in ihre geöffnete Position zwingende Kraft aufgehoben wird, legen sich die Polstücke automatisch an den jeweils zu erwärmenden Bauteilabschnitt an.

Idealerweise ist dabei die Lagerung und Vorspannung der Polstücke jeweils so ausgelegt, dass sich die Polstücke unter der Wirkung der Vorspannung nicht nur selbsttätig an das jeweilige Werkstück anlegen, sondern dabei erforderlichenfalls nach dem ersten Anlegen an das Werkstück unter der Wirkung der Vorspannung zusätzlich so gegenüber dem Werkstück verschwenken, dass sich der Kontaktbereich zwischen dem zu erwärmenden Bauteilabschnitt und dem Polstück noch vergrößert, weil sich die Polstücke unter der Wirkung der Vorspannung noch um eine andere Achse drehen und so optimal an dem zu erwärmenden Bauteilabschnitt anschmiegen. Auf diese Art und Weise ist gewährleistet, dass sich die Polstücke insbesondere beim Erwärmen von Hülsenabschnitten der unterschiedlichsten Spannfutter stets automatisch sauber an die verschiedenen Außenkonturen der zu erwärmenden Hülsenabschnitte anlegen.

Zweckmäßigerweise sind sämtliche Polstücke mit einem Aktuator gekoppelt, mittels dessen sie gemeinsam in eine gelüftete Position gedreht werden können. Der Aktuator ist vorzugsweise in Form eines verdrehbaren an einem (ortsfesten, möglicherweise höhenverschiebbaren) Gehäuseteil der Vorrichtung gelagerten Steuerkranzes ausgeführt, der mit den Polstücken über ein Hebelwerk oder eine Verzahnung gekoppelt ist und sie so bei seiner Verdrehung gegenüber ihren Zustelldrehachsen verschwenken kann. Ein solcher Aktuator ist nicht nur beim manuellen Betrieb der Vorrichtung vorteilhaft, weil er es ermöglicht, mit einer Handbewegung alle Polstücke gleichmäßig aufzuschwenken, sondern vor allem im automatisierten Betrieb der Vorrichtung. Denn mit dem Aktuator lässt sich sehr einfach ein Elektromotor, ein pneumatischer Betätigungszylinder oder ein elektrischer Zug- oder Druckmagnet koppeln, der ihn verdreht. Alternativ ist es natürlich auch möglich, jedes der Polstücke einzeln anzusteuern. Dies etwa dadurch, dass jedes der Polstücke einen hebelartigen Abschnitt aufweist, durch den das Polstück durch Zug oder Druck geschwenkt werden kann, beispielsweise mittels eines Zug- oder Druckmagneten.

Eine bevorzugte Ausgestaltung sieht vor, dass die Vorrichtung einen Messwertaufnehmer umfasst, der die Position, an der die Polstücke am zu erwärmenden Werkstück anliegen, misst. Dies erfolgt vorzugsweise dadurch, indem der Drehwinkel des Polstücks erfasst wird. Dies kann direkt am Polstück erfolgen oder aber, bei Verwendung eines Aktuators, indem die Position des Aktuators gemessen wird - oder am elektromotorischen, pneumatischen oder magnetischen Betätigungsorgan für den Aktuator ein Signal abgenommen wird, das proportional zur Position des Aktuators und damit auch zum Drehwinkel der Polstücke ist. Ideal ist dabei, dass die erfindungsgemäße Drehbarkeit der Polstücke um ihre Zustelldrehachse es sehr einfach ermöglicht, auf zuverlässige Art und Weise die Position der Polstücke zu bestimmen. Ist die Position der Polstücke bekannt, kann dies rationell dazu eingesetzt werden, um automatisch festzustellen, welche Dimensionen der aktuell zu erwärmende Bauteilabschnitt aufweist, und daraufhin passende Betriebsparameter für die Induktionsspulen einzustellen. Dies dient nicht nur der Energieersparnis, sondern minimiert vor allen Dingen die Gefahr von Bedienungsfehlern. Denn der zu erwärmende Bauteilabschnitt wird auf diese Art und Weise automatisch so weit erwärmt, wie für die Aufhebung oder Herstellung des Pressverbunds erforderlich. Eine Übererwärmung, die den zu erwärmenden Bauteilabschnitt oder gar das mit ihm im Pressverbund stehende Bauteil beeinträchtigen könnte, wird vermieden. Zudem wird in jedem Falle die Taktzeit optimiert, da der zu erwärmende Bauteilabschnitt nicht unnötig stark aufgeheizt wird und dann dementsprechend lange wieder abkühlen muss.

Idealerweise ist auch ein Messwertaufnehmer vorgesehen, dessen aktueller Messwert ein Maß für eine momentan im Bereich des zu erwärmenden Bauteilabschnitts erreichte Temperatur ist. Dabei ist der Messwertaufnehmer vorzugsweise ein berührungslos messender Temperatursensor. Er ist im Regelfall auf einen Bereich des zu erwärmenden Bauteilabschnitts gerichtet, misst also die Temperatur des zu erwärmenden Bauteilabschnitts unmittelbar und trifft nicht lediglich Rückschlüsse von der Temperatur eines nur sekundär interessierenden Bauteils auf den zu erwärmenden Bauteilabschnitt. Gerade die berührungslose Temperaturmessung hat den Vorteil, dass Messfehler auf Grund schlechten Anliegens des Temperatursensors oder unerwartete Wärmeübergangswiderstände vermieden werden.

Vorzugsweise weist die Vorrichtung eine Kühleinrichtung auf, mittels derer das Wiederabkühlen des erwärmten Bauteilabschnitts beschleunigt wird. Die Kühleinrichtung verwendet dabei Kühlflüssigkeit oder Pressluft als Kühlmittel. Das Kühlmittel tritt idealerweise über eine Mehrzahl von Düsen aus und kühlt die Oberfläche des erwärmten Bauteilabschnitts im Wesentlichen gleichmäßig ab. Das bedeutet, dass der Abkühlvorgang in jedem Falle so abläuft, dass in dem erwärmten und nun abzukühlenden Bauteilabschnitt keine unzuträglichen Spannungen durch momentan unter dem Einfluss des Kühlmittels auftretende Temperaturunterschiede drohen.

Eine bevorzugte Ausgestaltung sieht vor, dass das Kühlmittel im Wesentlichen abgesaugt wird. Soweit als Kühlmittel Wasser oder eine andere Flüssigkeit verwendet wird, wird diese derart fein verteilt auf den erwärmten Bauteilabschnitt aufgespult, dass ein wesentlicher Teil der zur Kühlung eingesetzten Flüssigkeitsmenge verdampft und dann abgesaugt werden kann. Auf diese Art und Weise wird im Wesentlichen verhindert, dass die Vorrichtung nass wird, bzw. größere Mengen von Kühlmittel nach unten abtropfen, und sich Pfützen im Bereich der Vorrichtung bilden und/oder außerhalb des wärmebehandelten Bauteilbereichs liegende Abschnitte des Bauteils mit der Flüssigkeit benetzt werden und Korrosionsgefahr besteht. Dies ist insbesondere für Werkzeugspannvorrichtungen von Bedeutung - Werkzeugspannfutter, die nach dem Ausschrumpfen des Werkzeugs zur nächsten Verwendung eingelagert werden sollen, müssen nicht erst getrocknet werden.

Nötigenfalls umfasst die Vorrichtung eine Einrichtung zum Auffangen und Ableiten von nach unten ablaufendem oder abtropfendem Kühlwasser. Auf diese Art und Weise wird sichergestellt, dass auch dann, wenn zuviel Kühlwasser appliziert wird, kein unkontrollierter Kühlmittelablauf oder eine unerwünschte, großflächigere Benetzung anderer Bauteilabschnitte als das zu kühlende Bauteilabschnitt auftritt.

Soweit flüssige Kühlmittel zum Einsatz kommen, wird die benötigte Kühlmittelmenge sinnvollerweise entweder in Abhängigkeit von der gemessenen Oberflächenendtemperatur des erwärmten Bauteilabschnitts oder in Abhängigkeit von der über die Stellung der Polstücke ermittelten Größe des zu erwärmenden Bauteilabschnitts dosiert.

Idealerweise ist die erfindungsgemäße Vorrichtung so gestaltet, dass die Polstücke vom Kühlmittel durchströmte Kanäle aufweisen, die vorzugsweise so angelegt sind, dass das Kühlmittel erst die Polstücke und von dort aus den erwärmten Bauteilabschnitt kühlt. Dies ist insbesondere für den eng getakteten, automatisierten Betrieb der Vorrichtung von Bedeutung. Zwar sind die Polstücke aus elektrisch nicht leitendem Material und erhitzen sich daher nicht unmittelbar unter dem Einfluss des von ihnen geleiteten Wechselfeldes. Dadurch, dass die Polstücke am Bauteil anliegen, wird ihnen jedoch vom Bauteil her Wärme zugeleitet. Diese Wärme wird über die vom Kühlmittel durchströmten Kanäle in den Polstücken abgeleitet, was auch bei eng getaktetem Betrieb eine unzulässige Erwärmung der Polstücke verhindert. Ein besonders geringer Aufwand für die Kühlung entsteht dabei dann, wenn die vom Kühlmittel durchströmten Kanäle so gestaltet sind, dass das Kühlmittel erst die Polstücke kühlt und von dort aus unmittelbar dem erwärmten Bauteilabschnitt zugeleitet wird.

Idealerweise verlaufen die vom Kühlmittel durchströmten Kanäle in den Polstücken quer zu den Polstücken, derart, dass das Kühlmittel auf den dem erwärmten Bauteilabschnitt abgewandten Rückseiten der Polstücke in die Polstücke eintritt und auf den dem erwärmten Bauteilabschnitt zugewandten Vorderseite der Polstücke wieder aus diesen austritt. Dabei ist dieses Polstück vorzugsweise mit mehreren nebeneinander angeordneten Kühlkanälen versehen, am besten derart, dass im Wesentlichen der gesamte bestimmungsgemäß unmittelbar mit zu erwärmenden Bauteilabschnitten in Kontakt bringbare Bereich jedes Polstücks innerhalb einer Kühlmittel durchflossenen Zone liegt. Eine derartige Ausgestaltung ermöglicht nicht nur die effektive "Mit-Kühlung" der Polstücke, sondern stellt insbesondere auch eine effektive und gleichmäßige Kühlung des erwärmten Bauteilabschnitts sicher. Denn das Kühlmittel wird bei einer derartigen Ausgestaltung unabhängig vom Durchmesser des jeweils erwärmten Bauteilabschnitts stets auf kürzestem Wege den Stellen am erwärmten Bauteil zugeleitet, die gekühlt werden müssen. Dies ist gegenüber einer unabhängig von den Polstücken feststehend angeordneten Kühleinrichtung von Vorteil. Denn eine Kühleinrichtung der letztgenannten Art bietet keine Gewähr dafür, dass das Kühlmittel wirklich alle bestimmungsgemäß mit der Vorrichtung erwärmten, von ihrer Dicke bzw. Geometrie her sehr unterschiedlichen Bauteilabschnitte jeweils optimal bestreicht.

Vorzugsweise ist auf den dem erwärmten Bauteilabschnitt abgewandten Rückseiten der Polstücke jeweils eine Verteilerkammer aufgebracht (vorzugsweise auch dichtend aufgeklebt oder aufgelötet), die über eine die Drehbewegung der Polstücke nicht wesentlich behindernde Zuleitung zu gegebener Zeit mit Kühlmittel gespeist wird und dann ihrerseits die Kühlmitteleintrittsöffnungen an der Rückseite der Polstücke speist. Auf diese Art und Weise lässt sich die Kühlung unmittelbar mittels der Polstücke sehr einfach realisieren. Denn die Polstücke selbst bestehen im Regelfall aus sehr hartem Sintermaterial, das sich schlecht bearbeiten lässt und bei dem es Schwierigkeiten bereitet, in verschiedene Richtungen verlaufende Kühlkanäle einzubringen, etwa einen zentralen Verteilerkühlkanal entlang der Längsachse des Polstücks, von dem aus dann quer zum Polstück andere Kühlkanäle abzweigen. Eine besonders praktikable Herstellungsmöglichkeit ist dabei die, dass die Kühlkammer zuerst auf die Rückseite der Polstücke des jeweiligen Polstücks aufgebracht wird und dann die Kühlkanäle derart in das Polstück gebohrt werden, dass sie dieses durchdringen und so auf der Rückseite des Polstücks eine Verbindung zur Verteilerkammer herstellen.

Eine weitere bevorzugte Ausgestaltungsform der erfindungsgemäßen Vorrichtung sieht vor, dass die magnetfelderzeugenden Spulen und/oder die die Polstücke beweglich haltenden Lager gegen Eindringen von Kühlmittel abgedichtet sind. Vorzugsweise erfolgt dies jeweils in Form einer beweglichen Dichtungseinrichtung, wie etwa eines Faltenbalges. Die Spule und/oder das Lager des jeweiligen Polstücks ist dann auf der vor Kühlmittelzutritt geschützten Rückseite der Dichtungseinrichtung angeordnet. Die Dichtungseinrichtung weist einen Ausschnitt auf, durch den hindurch das Polstück dichtend umgriffen in den mit Kühlmittel beaufschlagten Bereich des zu erwärmenden Bauteilabschnitts ragt. Im Falle eines Faltenbalgs kann ein solcher Ausschnitt eine Öffnung in dem Faltenbalg sein, die so ausgestaltet ist, dass sich die Ränder der Öffnung dichtend an die Oberflächen des durch die Öffnung hindurchragenden Polstücks anschmiegen.

Idealerweise ist die Dichtungseinrichtung als einstückiger, in Umfangsrichtung im Wesentlichen geschlossener Dichtungsbalg ausgeführt, in den für jedes Polstück ein Faltenbalg eingearbeitet ist. Auf diese Art und Weise kann der kühlmittelbeaufschlagte Kernbereich der Vorrichtung sehr einfach gegenüber dem Außenbereich der Vorrichtung abgedichtet werden, zu dem kein Kühlmittelzutritt stattfinden darf. Anzumerken ist dabei, dass der Dichtungsbalg bei einer Vorrichtung, in die der zu erwärmende Bauteilabschnitt von unten nach oben eingeführt wird, selbstverständlich nicht rundum geschlossen ist, sondern oben und unten offen ist, dies nämlich in einer Weise, dass das zu erwärmende Bauteil von unten her in den in Umfangsrichtung im Wesentlichen geschlossenen Bereich des Dichtungsbalges eingeführt werden kann und ggf. ein Bauteilabschnitt (bzw. im Fall eines Werkzeugspannfutters das in diesem im Presssitz gehaltene Werkzeug) nach oben aus dem in Umfangsrichtung vom Dichtungsbalg umschlossenen Bereich herausragen kann. Wichtig ist nur, dass die besagten Öffnungen im Dichtungsbalg so ausgestaltet sind (ggf. im Zusammenspiel mit anderen Gehäuseteilen) dass Kühlmittel nicht derart aus den besagten Öffnungen austreten kann, dass es sozusagen den Dichtungsbalg umgeht, um dann doch in Bereiche zu gelangen, zu denen kein Kühlmittelzutritt erfolgen soll.

Eine im Sinne der Erfindung ideale Werkzeugspannvorrichtung ist automatisiert, arbeitet mit einer elektronischen Steuerung und umfasst einen Messwertaufnehmer, der die Position, in der die Polstücke an der Hülsenpartie des jeweiligen Werkzeugspannfutters anliegen, misst und in Abhängigkeit von der gemessenen Position die individuelle Heizzeit und/oder die Heizleistung und vorzugsweise auch den individuellen Kühlmittelzufluss und/oder die Zeit der Kühlmittelapplikation der Werkzeugspannvorrichtung einstellt. Dies kann dadurch erfolgen, dass für die gesamte Reihe der bestimmungsgemäß mit der Werkzeugspannvorrichtung zu erwärmenden Werkzeugspannfutter empirisch festgestellt wird, welche Heizzeit und/oder Heizleistung im jeweiligen Fall optimal ist. Gleiches wird vorzugsweise auch im Hinblick auf das Kühlmittel festgestellt. Über die gemessene Position der Polstücke folgt dann die Zuordnung der Parameter zu dem konkret zu erwärmenden bzw. abzukühlenden Hülsenabschnitt des jeweiligen Werkzeugspannfutters.

Weitere Vorteile, Verwendungs- und Ausgestaltungsmöglichkeiten der erfindungsgemäßen Vorrichtung ergeben sich aus der nachfolgenden Beschreibung der Ausführungsbeispiele.

Die Fig. 1 zeigt ein erstes Ausführungsbeispiel der Erfindung im Horizontalschnitt, wobei sich dieses Ausführungsbeispiel u. a. dadurch auszeichnet, dass seine Polstücke in bestimmter Art und Weise magnetisch aktiviert werden, um einem Kurzschluss-Magnetfluss unmittelbar zwischen den Polstücken entgegenzuwirken.

Die Fig. 2 zeigt das erste Ausführungsbeispiel der Erfindung im Teil-Seitenschnitt, so dass ein Polstück im Detail zu erkennen ist.

Die Fig. 3 und 4 zeigen an Hand von Detaildarstellungen des ersten Ausführungsbeispiels die durch die Kugelgelenke bedingte Winkeleinstellbarkeit der Polstücke.

Die Fig. 5 und 6 zeigen ein zweites Ausführungsbeispiel der Erfindung das mit andersartig geformten, vereinfachten Polstücken ausgerüstet ist.

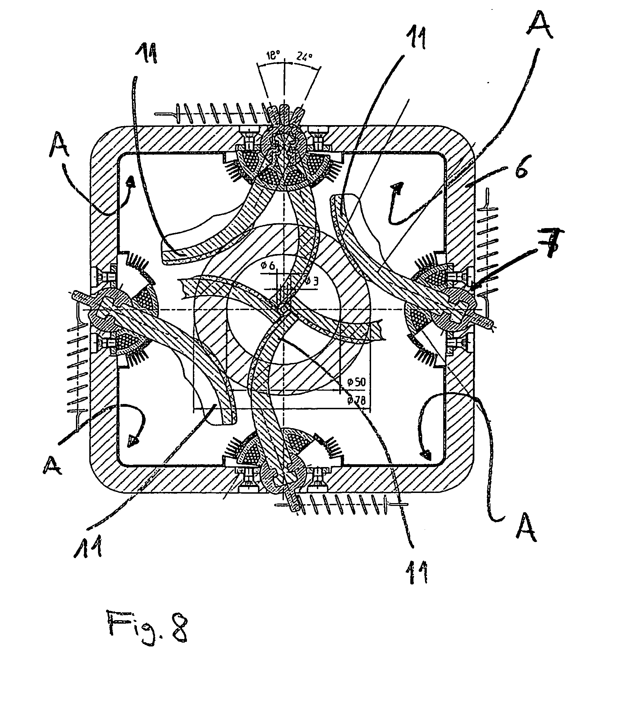

Die Fig. 7 und 8 zeigen ein drittes und viertes Ausführungsbeispiel, wobei sich diese Ausführungsbeispiele dadurch auszeichnen, dass ihr Gehäuse in bestimmter Art und Weise ausgestaltet ist, um einem Kurzschluss-Magnetfluss unmittelbar zwischen je einem Polstück und dem ihm nahe liegenden Wandabschnitt des Gehäuses entgegenzuwirken.

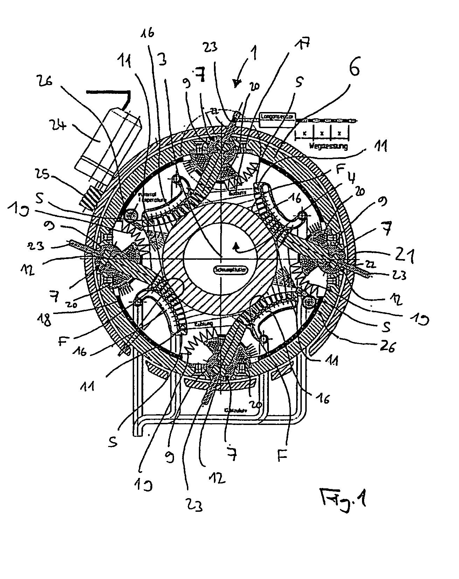

Die Fig. 1 zeigt ein Ausführungsbeispiel, die das grundlegende Prinzip der Vorrichtungen der erfindungsgemäßen Art verdeutlicht, hier an Hand einer Werkzeugspannvorrichtung. Die Vorrichtung sei nachfolgend kurz "Induktionsspannvorrichtung" genannt. Diese Vorrichtung ist mit einer (nicht gezeigten) Steuerung versehen bzw. kombiniert, die die Polstücke in einer bestimmten, später noch näher zu erläuternden Art und Weise ansteuert, so dass es nicht zu einem nennenswerten Kurzschluss-Magnetfluss zwischen benachbarten Polstücken kommt.

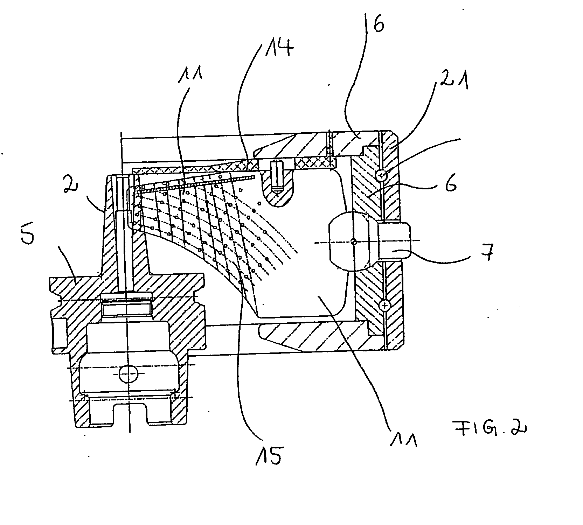

In Fig. 1 mit der Bezugsziffer 2 gekennzeichnet ist der Querschnitt eines Hülsenabschnitts eines in Fig. 1 nicht näher gezeigten Werkzeughalters. Der Hülsenabschnitt 2 ist zur Betriebsdrehachse 3 des Werkzeughalters rotationssymmetrisch (abgesehen von nie völlig zu vermeidenden, toleranzbedingten aber tolerablen Unwuchten) und weist eine Aufnahmebohrung 4 auf, in die der Schaft eines Werkzeugs derart eingesteckt werden kann, bzw. eingesteckt ist, dass bestimmungsgemäß ein Pressverbund zwischen dem Werkzeugschaft und dem Hülsenabschnitt 2 besteht. Wie derartige Werkzeughalter in der Praxis insgesamt gestaltet sind, ist dem Fachmann bekannt und wird zudem von Fig. 2 beispielhaft illustriert. Lediglich der Vollständigkeit halber ist anzumerken, dass die Hülsenabschnitte der in der Praxis gängigen Werkzeughalter an ihrem Außenumfang fast durchweg eine leicht konische Hüllfläche aufweisen, wobei der Kegelwinkel der individuellen Hüllflächen in gewissen Grenzen variieren kann, je nach Hersteller und Einsatzzweck. Abhängig vom Durchmesser des durch Pressverbund bestimmungsgemäß zu spannenden Werkzeugschafts weisen die Hülsenabschnitte deutlich unterschiedliche Durchmesser, Längen (in Richtung der Betriebsdrehachse 3) und Wandstärken auf - womit sich deutliche Unterschiede in Bezug auf die im Einzelfall zu erwärmende Masse des jeweiligen Hülsenabschnitts ergeben.

Um den erforderlichen Pressverbund zwischen dem Hülsenabschnitt 2 und dem jeweiligen Werkzeugschaft herzustellen, wird der Hülsenabschnitt 2 induktiv erhitzt (auf ca. 450 Grad). Auf Grund von Wärmedehnung weitet er sich dabei so weit auf, dass der kalte Werkzeugschaft trotz seines Übermaßes in die Aufnahmebohrung eingesteckt werden kann. Mit dem Abkühlen des Hülsenabschnitts stellt sich dann der gewünschte Pressverbund zwischen dem Hülsenabschnitt und dem Werkzeugschaft ein, so dass der Werkzeugschaft verdrehfest in dem Hülsenabschnitt gehalten wird und das jeweilige Nenndrehmoment vom Werkzeugschaft reibschlüssig auf die Hülsenpartie übertragen werden kann und umgekehrt.

Um den Pressverbund zu lösen wird der Hülsenabschnitt wieder erwärmt. Dies erfolgt abermals induktiv. Hierbei macht man sich zu Nutze, dass die Wirbelströme, mit denen die Hülsenpartie beaufschlagt wird, auf Grund des bekannten Skineffekts an der Oberfläche der Hülsenpartie bleiben, wodurch die Hülsenpartie durch Wärmeleitung von außen nach innen erwärmt wird. Es ist dadurch möglich, die Hülsenpartie auf eine Temperatur von etwa 450 Grad aufzuheizen, bevor eine wesentliche Wärmezufuhr zu dem in der Hülsenpartie steckenden Schaftabschnitt des Werkzeugs erfolgt ist, so dass sich ein kurzes Zeitfenster ergibt, innerhalb dessen der praktisch noch kalte Schaftabschnitt des Werkzeugs aus der bereits hinreichend aufgedehnten Hülsenpartie herausgezogen werden kann.

Um die Länge dieses Zeitfensters hinreichend groß zu machen, damit genügend Gelegenheit ist um das Werkzeug zuverlässig herausziehen zu können, aber auch um lokale Überhitzungen zu vermeiden kommt es wesentlich darauf an, die Hülsenpartie nicht nur schnell, sondern dabei auch möglichst gleichmäßig zu erwärmen.

Lediglich der Vollständigkeit halber sei erwähnt, dass der Werkzeughalter 5 Bestandteil einer Arbeitsspindel einer Werkzeugmaschine sein oder ein eigenständiges Bauteil mit einer Schnellkupplung an der dem Hülsenteil abgewandten Seite (z. B. Steilkegelkupplung oder Hohlschaftkupplung).

Die eigentliche Induktionsspannvorrichtung 1 besteht aus einem hier im Wesentlichen runden Gehäuse 6, das von Fig. 1 im Horizontalschnitt gezeigt wird. Es ist an seiner Unterseite offen, so dass der jeweilige Werkzeughalter 5 von unten in das Zentrum des Gehäuses eingeschoben werden kann bzw. das Gehäuse von oben über den jeweiligen Werkzeughalter geschoben werden kann. Eine weitere Öffnung auf der Oberseite des Gehäuses ermöglicht es, dass längere in den Werkzeughalter eingespannte Werkzeuge nach oben aus dem Gehäuse herausragen können und Werkzeuge von oben in den Werkzeughalter eingesetzt bzw. nach oben aus ihm herausgezogen werden können. Selbstverständlich kann die Induktionsspannvorrichtung ggf. auch "liegend" betrieben werden, die Schnittebene der Fig. 1 wäre dann eine gedachte Vertikalebene.

Wie in Fig. 1 zu erkennen sind am Gehäuse 6 mittels mehrachsig drehbaren Gelenken, hier in der Form von Kugelgelenken 7, Polstücke 11 drehbar gehalten. Zu dem Zweck ist das Gehäuse mit (i. d. R. separat eingesetzten) hier einstückigen Kugelpfannen 9 ausgestattet, in die Kugelstücke 10 drehbar eingesetzt sind. Die Kugelstücke 10 werden durch kugelig angefaste Überwurfscheiben mittels Schrauben an den Kugelpfannen 9 gehalten. Die Kugelstücke 10 tragen jeweils ein Polstück 11, das in eine Nut im Kugelstück 10 eingeschoben ist. Über die Kugelstücke 10 ist den Polstücken 11 u. a. jeweils eine Zustelldrehachse 12 zugeordnet, die - hier vollständig - parallel zu der Betriebsdrehachse 3des Werkzeughalters verläuft.

Die Polstücke bestehen aus magnetisch gut leitendem und elektrisch nicht leitendem Material, wie etwa den für einen solchen Einsatzzweck bekannten Ferritwerkstoffen.

Zweckmäßigerweise reitet (mitdrehbar) auf jedem der Polstücke eine Induktionsspule, die das ihr zugeordnete Polstück mit einem Magnetfeld speist. Der entscheidende Punkt ist nun, dass diese Induktionsspulen in bestimmter Weise angesteuert werden. Es werden nämlich immer nur zwei Induktionsspulen gleichzeitig eingeschaltet, und zwar die von zwei sich diametral gegenüberliegenden Polstücken. Dabei wird im Regelfall so vorgegangen, dass diese beiden Induktionsspulen eine bestimmte Zeit eingeschaltet bleiben und dann wieder ausgeschaltet werden. Gleichzeitig oder im Anschluss daran werden die beiden Induktionsspulen des bisher inaktiven Polstück-Paares eingeschaltet. Nach einer bestimmten Zeit werden auch diese Induktionsspulen wieder ausgeschaltet und der Zyklus beginnt von neuem durch Aktivierung des erstgenannten Polstück-Paares. Auf diese Art und Weise befindet sich zwischen zwei momentan aktiven Polstücken immer beidseitig ein momentan nicht aktives Polstück, so dass zwischen den beiden momentan aktiven Polstücken immer eine vergrößerte Luftstrecke vorhanden ist. Nämlich eine Luftstrecke, die so groß ist, dass es nicht (oder zumindest nicht nennenswert) zu einem Kurzschluss-Magnetfluss zwischen den beiden momentan aktiven Polstücken kommt. Dabei wird durch den oben beschriebenen zyklischen Wechsel der Aktivierung der Polstücke dennoch eine sehr gleichmäßige Erwärmung erreicht.

Das Reiten der Induktionsspulen auf den Polstücken erleichtert deren erfindungsgemäße Drehbarkeit. Denn bei anderweitig untergebrachten Induktionsspulen ist es relativ schwierig bzw. deutlich aufwändiger, die Polstücke unabhängig von ihrer jeweiligen Verdrehstellung mit dem erforderlichen Magnetfluss zu beaufschlagen. Zweckmäßigerweise sind die Induktionsspulen jeweils so ausgestaltet, dass sie als Drehwinkelbegrenzer für die Polstücke dienen, aber deren Drehbarkeit ansonsten nicht beeinträchtigen.

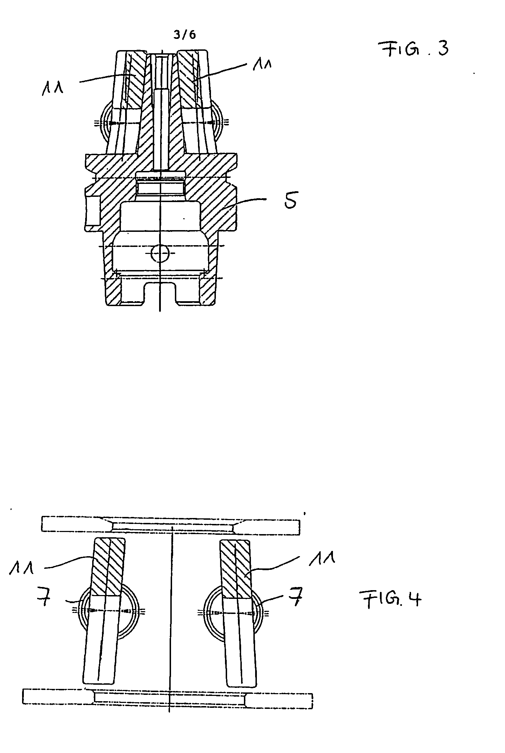

Um diese Zustelldrehachse 12 können die Polstücke hin zu dem zu erwärmenden Hülsenabschnitt 2 des Werkzeughalters 5 geschwenkt werden, i. d. R. so weit, dass es zu einem ersten Anliegen der Polstücke am zu erwärmenden Hülsenabschnitt kommt. Sofern es mit dem ersten Anliegen im konkreten Fall (z. B. auf Grund eines entsprechenden Kegelwinkels der zu erwärmenden Hülsenpartie) noch nicht zu einer optimalen Anlage zwischen dem Polstück und dem zu erwärmenden Bauteil- bzw. Hülsenabschnitt kommt, ermöglicht es das Kugelgelenk, dass das Polstück 11 eine zusätzliche Schwenk- bzw. Kippbewegung ausführt. Dies gewährleistet, dass sich das Polstück so gut wie im Einzelfall möglich anlegt. Die soeben beschriebene "Winkeleinstellung" der Polstücke wird insbesondere durch die Fig. 3 und 4 illustriert.

Bei alledem kommen die Polstücke, anders als im Stand der Technik, nicht mit ihrer Stirnseite S, sondern mit ihrer Flanke F mit dem zu erwärmenden Hülsenabschnitt in Kontakt.

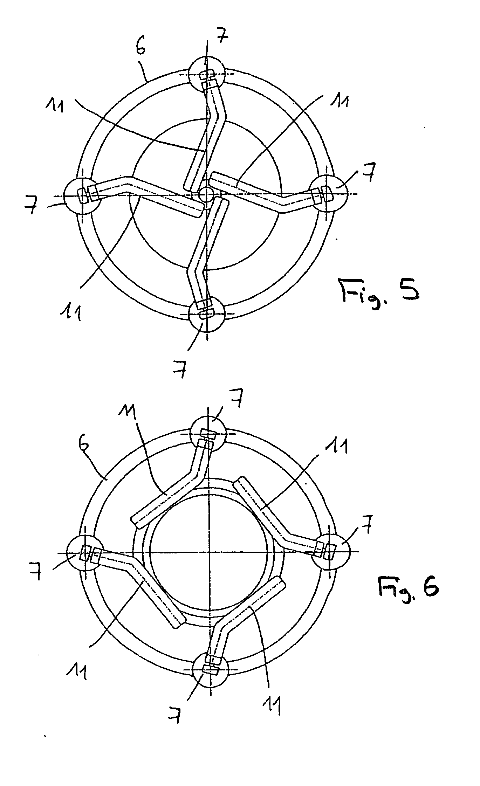

Es liegt angesichts der Fig. 1 auf der Hand, dass der schmale bzw. ggf. mehr oder minder linienförmige Bereich, mit dem die Flanke F des Polstücks mit der Mantelfläche des zu erwärmenden Hülsenabschnitts in Kontakt kommt, an ganz unterschiedlichen Stellen der Flanke liegt - je nach dem, welchen Durchmesser der aktuell zu erwärmende Hülsenabschnitt aufweist, d. h. wie weit die Polstücke nach innen, hin zur Betriebsdrehachse 3 des jeweiligen Werkzeughalters schwenken müssen, um die Oberfläche des zu erwärmenden Hülsenabschnitts zu erreichen. Am Beispiel einer zweiten, mit gleichermaßen schwenkenden Polstücken versehenen Ausführungsform der erfindungsgemäßen Vorrichtung veranschaulichen dies die Fig. 5 und 6.

Dies ist von Bedeutung, gerade auch für Induktionsspannvorrichtungen zum Erwärmen von Hülsenabschnitt an Werkzeughaltern. Denn dies ermöglicht es erstmals auf einfache Art und Weise, ohne mehrteilige oder gar in sich bewegliche Polstücke, eine Vielzahl verschiedener Teilflächen 13 an den Polstücken vorzusehen, die (bei bestimmungsgemäßem Gebrauch) jeweils nur mit bestimmten zu erwärmenden Bauteilen (bzw. Hülsenabschnitten bestimmter Werkzeughalter) in Kontakt kommen und daher so optimiert sein können, dass sie mit diesen optimal in Kontakt kommen. Die Fig. 2 zeigt eine Ansicht der Flanke F eines der Polstücke 11 und lässt auch die auf der Flanke F nebeneinander angeordneten Teilflächen 13 erkennen - die mehr oder minder ausgeprägten Grenzen zwischen den einzelnen Teilflächen 13 sind in Fig. 2 als gestrichelte Linien dargestellt. Vom Grundsatz gilt, dass sich die Teilflächen (zumindest in erster Näherung) berechnen lassen, wenn man sich eine Schar von Hüllflächen vorgibt, die den zu kontaktierenden Umfangsflächen der verschiedenen bestimmungsgemäß zu erwärmenden Hülsenpartien entsprechen und dann die Bedingung aufstellt, dass im Prinzip eine in ihrer Lage bekannte Teilfläche auf jeder dieser Hüllflächen bei entsprechend gedrehtem Polstück mit einer Teilfläche 13 des Polstücks zusammenfallen muss. Wo Berechnungen zu aufwendig oder nicht ohne weiteres zielführend sind (z. B. weil jede Teilfläche ein Kompromiss aus der Abstimmung auf unterschiedliche Konturen verschiedener Hülsenabschnitte sein soll), können Versuche angestellt werden, ggf. ergänzend. Dem Fachmann sind die fachüblichen Verfahrensweisen geläufig, die er anwenden muss, um mit diesem Ansatz zum Ziel zu kommen.

Die insgesamt gesehen konvex gegenüber der Oberfläche des zu erwärmenden Bauteilabschnitts gekrümmte Form der Flanken F der Polstücke 11 unterstützt die erfindungsgemäße Zuordnung zwischen bestimmten Teilflächen auf der Flanke und entsprechenden Flächen auf bestimmten Hülsenpartien. Die insgesamt konvex gekrümmte Form schließt nicht aus, dass zumindest einzelne Teilflächen in sich auch konkav gegenüber dem zu erwärmenden Bauteilabschnitt gekrümmt sein können, was hier allerdings zeichnerisch nicht dargestellt ist.

Die Fig. 2 zeigt einen weiteren wesentlichen Vorteil der Erfindung gegenüber dem Vorbekannten. Die erfindungsgemäße Induktionsspannvorrichtung ist nicht auf einen höhenverstellbaren Anschlag für das richtige Positionieren der zu erwärmenden Hülsenabschnitte angewiesen, sondern kommt mit einem in Höhenrichtung unveränderlichen Anschlag 14 aus, gegen den z. B. die stirnseitige Ringfläche des jeweils zu erwärmenden Hülsenabschnitts anschlägt. Dies deshalb, weil die Höhe jedes Polstücks 11 von seiner Spitze bzw. Stirnfläche S in Richtung auf sein Kugelgelenk 7 zunimmt, zumindest auf der Seite der mit dem Hülsenabschnitt in Kontakt tretenden Flanke F. Der Begriff "Höhe" bezeichnet dabei die Erstreckung, die das Polstück in Richtung (im Wesentlichen) parallel zur Betriebsdrehachse 3 aufweist. Die derart variable Höhe des Polstücks bewirkt, dass kurze, zum Spannen kleiner Werkzeugschaftdurchmesser bestimmte Hülsenpartien von allein wirklich nur im zu erwärmenden Bereich mit den Polstücken in Kontakt kommen, während lange, zum Spannen großer Schaftdurchmesser vorgesehene Hülsenabschnitte von allein auf hinreichender Länge mit den Polstücken in Kontakt kommen. Der Aufwand für einen höhenverstellbaren Anschlag und die durch einen solchen bedingten Fehlermöglichkeiten entfallen also.

Dass der Anschlag 14 nicht höhenverstellbar ist, heißt allerdings nicht, dass er nicht beweglich ist - wie die Fig. 2 erkennen lässt, ist der (ggf. jeweilige) Anschlag 14 vorzugsweise so gelagert, dass er mit dem ihm zugeordneten Polstück mitschwenken kann. Dabei ist er allerdings nicht starr mit dem Polstück verbunden, sondern derart mit Spiel mit dem Polstück gekoppelt, dass keine Verspannungen oder Behinderungen zuwischen dem um eine räumlich feste Achse drehbaren Anschlag 14 und dem sich ggf. mehrachsig um das Kugelgelenk 7 drehenden Polstück 11 auftreten.

Wie die Zusammenschau der Fig. 1 und 2 zeigt ist eine sehr effektive und gleichmäßige Art der Kühlung vorgesehen. Gekühlt wird nicht nur der jeweils zu erwärmende Bauteilabschnitt. Gekühlt werden auch die Polstücke, d. h. die ihnen im Zuge der Erwärmung des Bauteilabschnitts von diesem zugeleitete Wärme wird abgeführt. Zu diesem Zweck ist jedes der Polstücke mit einer Schar von quer orientierten Kühlkanälen 15 versehen. Auf der dem zu erwärmenden Bauteilabschnitt abgewandten Rückseite der Polstücke 11 ist in dichter Verbindung jeweils eine Verteilerkammer 16 angebracht. Diese wird über eine gelenkige Kühlmittelzuleitung, vorzugsweise in Gestalt eines flexiblen Rohres oder Schlauchs, mit Kühlmittel gespeist. Das Kühlmittel strömt von dort aus durch die Kühlkanäle 15 und damit durch das Polstück 11 hindurch. Es bestreicht von dort aus auf kürzestem Wege den ihm nahe liegenden Bereich des erwärmten Bauteilabschnitts. Da alle bzw. mehrere der Polstücke auf diese Art und Weise den Bauteilabschnitt mit Kühlmittel beaufschlagen, kommt es zu einer höchst effektiven wie gleichmäßigen Abkühlung des Bauteilabschnitts. Schädliche, durch ungleichmäßige Abkühlung im Bauteilabschnitt auftretende Spannungen werden so vermieden. Als Kühlmittel werden zweckmäßigerweise Pressluft, oder, noch effektiver, entsprechende Kühlflüssigkeiten verwendet - insbesondere auch solche, die bei der spanenden Bearbeitung ohnehin zum Einsatz kommen und korrosionshindernd sind.

Insbesondere der Einsatz flüssiger Kühlmittel erfordert einen gegenüber den stromführenden Teilen und vorzugsweise auch gegenüber den Lagern hinreichend abgedichteten Arbeitsraum. Wie die Fig. 1 zeigt, lässt sich eine effektive wie zuverlässige Abdichtung dadurch erreichen, dass der Arbeitsraum 17 (also das den zu erwärmenden und wieder abzukühlenden Bauteilabschnitt aufnehmende Zentrum des Gehäuses 6) durch einen in das Gehäuse eingesetzten, in Umfangsrichtung im Wesentlichen geschlossenen Dichtungsbalg abgedichtet wird. An den Dichtungsbalg sind im Bereich der Polstücke 11 Faltenbälge 19 angeformt, die die auf den Polstücken reitenden Spulen 20 und die Kugelgelenke 7 wirksam gegenüber dem Arbeitsraum abschirmen.

Zur Überwachung der Oberflächentemperatur des zu erwärmenden Bauteilabschnitts sind hier zwei Infrarot-Temperatursensoren 26 vorgesehen, die auf die Oberfläche des zu erwärmenden Bauteilabschnitts gerichtet sind und berührungslos dessen Temperatur messen, Fig. 1. Alternativ oder (seltener) zusätzlich kann an entsprechender Stelle der mit dem zu erwärmenden Bauteilabschnitt in Kontakt kommenden Polstückseitenflanke F ein Temperaturmessstreifen vorgesehen sein. Dieser ist so dünn oder ggf. soweit in die Oberfläche der Polseitenflanke eingelassen, bzw. an zurückversetzter Stelle angeordnet, dass er nicht in einer Art und Weise aufträgt, die die saubere Anlage der Polseitenflanke am zu erwärmenden Bauteilabschnitt behindert.

Die Temperaturmessung dient zur Verhinderung unzulässiger Erwärmung, kann aber bei Bedarf als "Regelgrösse" zur regulären Beendigung des Aufheizzyklus eingesetzt werden.

Am Gehäuse 6 ist ein drehbarer Steuerkranz 21 vorgesehen. Die Polstücke weisen jeweils nach außen, in eine Aussparung 22 des Steuerkranzes 21 ragende Schwenkhebel 23 auf, hier in Form von Fortsätzen an den Kugelgelenken 7. Sobald der Steuerkranz verdreht wird (im Ausführungsbeispiel im Uhrzeigersinn) erzwingt er eine Drehung der Polstücke in eine weiter geöffnete Stellung, weg von der bestimmungsgemäßen Lage der Betriebsdrehachse 3 eines zu erwärmenden Bauteils. Der Steuerkranz kann dabei von einem hier nicht dargestellten Federelement derart vorgespannt sein, dass er sich gegen den Uhrzeigersinn in Schließstellung dreht, sobald er losgelassen wird und dadurch die Polstücke zwangsweise an den zu erwärmenden Abschnitt eines neu in die Vorrichtung eingebrachten Bauteils anlegt.

Um einen automatisierten Betrieb der Vorrichtung zu ermöglichen ist der Steuerkranz bei der hier gezeigten Vorrichtung motorisch angetrieben, vgl. Fig. 1, der Motor trägt die Bezugsziffer 24. Da die Koppelung zwischen dem Steuerkranz und den Polstücken ausgesprochen robust ist, ist es alternativ auch möglich die Polstücke nicht (allein) durch Federvorspannung des Steuerrings sondern aktiv an den zu erwärmenden Bauteilabschnitt anzulegen. Dies geht besonders gut, wenn der Motor über seine Stromaufnahme gesteuert und damit rechtzeitig abgeschaltet wird (oder statt des Motors als Antrieb für den Steuerkranz ein umsteuerbarer Pneumatikzylinder verwendet wird). Im vorliegenden Fall soll über den Motor sogar eine Verriegelung des Steuerkranzes erreicht werden (optional). Der Steuerkranz bildet daher zusammen mit dem Motor ein selbsthemmendes Schneckengetriebe, angedeutet durch die auf der Motorwelle sitzende Schnecke 25.

Die aktuelle Position der Polstücke wird gemessen, wie in Fig. 1 gezeigt. Zu diesem Zweck ist der Schwenkhebel 23 eines der Polstücke 11 mit einem Längenaufnehmer gekoppelt. Der von diesem gemessene Weg bzw. Differenzweg ist ein Maß für die aktuelle Position des Polstücks und der anderen ebenfalls mit dem Steuerkranz gekoppelten Polstücke. Die Elektronik der Vorrichtung schließt in Abhängigkeit von dem vom Längenaufnehmer vorgegebenen Wert auf die Größe des zu erwärmenden Bauteilabschnitts und wählt die dazu passenden Betriebsparameter aus.

Schließlich ist noch anzumerken, dass die Polstücke 11 zweckmäßigerweise insoweit sinngemäß von der Lehre der vorveröffentlichten WO 2006/084678 Gebrauch machen, dass die Polstücke 11 nicht bis an das äußerste freie Ende des zu erwärmenden Hülsenabschnitts am Hülsenabschnitt anliegen, sondern im Nahbereich des äußersten freien Endes des Hülsenabschnitt Abstand (bzw. größeren Abstand) vom zu erwärmenden Hülsenabschnitt halten, dergestalt, dass es auch im Nahbereich des äußersten freien Endes des Hülsenabschnitts nicht zu einer störenden Ungleichmäßigkeit in der Erwärmung kommt. Wegen der Einzelheiten wird insbesondere auf die Ausführungen auf Seite 4, Zeilen 24 bis Seite 5, Zeile 7 der WO 2006/084678 verwiesen, die im vorliegenden Fall sinngemäß gelten.

Abschließend ist noch zum ersten Ausführungsbeispiel festzuhalten, dass die Polstücke 11, wenn sie am zu erwärmenden Bauteilabschnitt anliegen, auf Grund des hier zur Anwendung kommenden Querfeldprinzips nur ein derart geringes Streufeld in die Umgebung entlassen, dass beim Ein- und Ausspannen von Werkzeugen eine besondere Abschirmung des Werkzeugschafts verzichtet werden kann. Gleichwohl ist die Vorrichtung (wenn auch nicht im Bereich des Werkzeugschafts) im Wesentlichen nach außen abgeschirmt ausgeführt (nicht gezeigt). Dies, um insbesondere Bediener mit Herzschrittmachern zuverlässig nur unbedenklichen Feldkonzentrationen auszusetzen.

Die Fig. 5 und 6 zeigen ein zweites Ausführungsbeispiel der Erfindung, das mit andersartig geformten, vereinfachten Polstücken 11 ausgerüstet ist. Auch diese Polstücke 11 können mit der Umfangsfläche des zu erwärmenden Bauteilabschnitts in Kontakt gebracht werden, ggf. aber auch an der stirnseitigen Kreisringfläche eines zu erwärmenden Bauteilabschnitts anliegen - etwa so, wie von Fig. 5 illustriert.

Soweit nicht wegen der vereinfachten Gestaltung der Polstücke ein Anderes gilt, treffen die zuvor zum ersten Ausführungsbeispiel gegebenen Ausführungen auch auf dieses zweite Ausführungsbeispiel zu. Insbesondere werden auch hier die Polstücke 11 zyklisch paarweise angesteuert, um so die Luftstrecke zwischen den aktiven Polstücken zu vergrößern, so, wie oben für das erste Ausführungsbeispiel beschrieben.

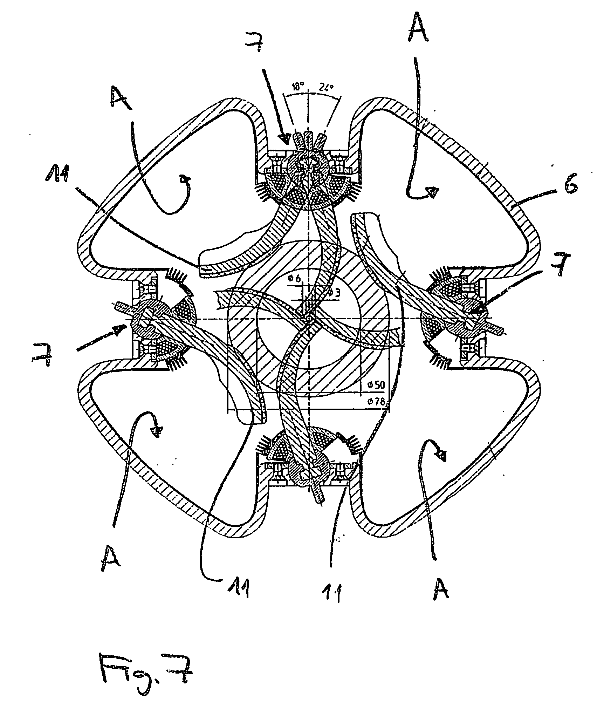

Die Fig. 7 zeigt ein drittes Ausführungsbeispiel der Erfindung. Dieses Ausführungsbeispiel zeichnet sich dadurch aus, dass ihr Gehäuse 6 in bestimmter Art und Weise ausgestaltet ist, um einem Kurzschluss-Magnetfluss unmittelbar zwischen je einem Polstück 11 und dem ihm nahe liegenden Wandabschnitt des Gehäuses 6 entgegenzuwirken, dazu sogleich. Ansonsten funktioniert dieses Ausführungsbeispiel in gleicher Weise, wie die oben beschriebenen ersten beiden Ausführungsbeispiele. Vorzugsweise werden auch die Polstücke 11 so angesteuert, wie oben für die ersten beiden Ausführungsbeispiele beschrieben. Indes ist letzteres kein Muss, da es je nach Lage des konkreten Einzelfalls auch ausreichen kann nur dafür zu sorgen, dass es nicht (oder nicht nennenswert) zu einem Kurzschluss-Magnetfluss unmittelbar zwischen den Polstücken 11 und dem Gehäuse 6 kommt.

Der Sinn und die Wirkung der Maßnahmen, derer sich dieses dritte Ausführungsbeispiel bedient, ergibt sich recht anschaulich, wenn man das gemäß Fig. 1 für das erste Ausführungsbeispiel verwendete runde Gehäuse 6 und das Gehäuse 6 des dritten Ausführungsbeispiels vergleicht. Bei Verwendung des besagten runden Gehäuses des ersten Ausführungsbeispiels kann es unter bestimmten Umständen, insbesondere beim Erhitzen von Hülsenpartien mit großem Durchmesser, dazu kommen, dass die Nutzabschnitte der Polstücke 11, d. h. die Abschnitte der Polstücke, die bestimmungsgemäß zum Kontakt mit den verschiedenen Hülsenpartien vorgesehen sind, zu nahe an das Gehäuse 6 heranschwenken. Dadurch kommt es dann u. U. zu einem störenden Kurzschluss-Magnetfluss unmittelbar zwischen dem betreffenden Polstück 11 und dem Gehäuse 6. Dieser Kurzschluss-Magnetfluss fließt nicht über die zu erwärmende Hülsenpartie, kann also nicht genutzt werden.

Um insoweit Abhilfe zu schaffen, ist das Gehäuse 6 bei diesem dritten Ausführungsbeispiel nach Art eines Kleeblatts ausgebildet, im speziellen Fall wegen der vier Polstücke nach Art eines vierblättrigen Kleeblatts. Das führt dazu, dass das Gehäuse in den Bereichen, in denen die Polstücke schwenkbar gelagert sind, seine größte Zentrumsnähe aufweist (bezogen auf die Symmetrieachse des bestimmungsgemäß positionierten Werkstücks), während alle anderen Wandbereiche des Gehäuses zentrumsferner sind. Auf diese Art und Weise weist das Gehäuse 6 zumindest im Bereich der oben definierten Nutzabschnitte der Polstücke 11 Ausbuchtungen A auf, so dass sich zwischen dem betreffenden Polstück 11 und der Ausbuchtung A eine vergrößerte Luftstrecke befindet. Diese verhindert, dass unmittelbar zwischen dem Polstück 11 bzw. dem Nutzabschnitt des Polstücks und dem Gehäuse 6 ein nennenswerter Kurzschluss-Magnetfluss entsteht.

Das für das dritte Ausführungsbeispiel Gesagte gilt sinngemäß auch für das vierte Ausführungsbeispiel. Auch hier ist es so, dass das Gehäuse 6 in den Bereichen, in denen die Polstücke 11 schwenkbar gelagert sind, seine größte Zentrumsnähe aufweist, während alle anderen Wandbereiche des Gehäuses 6 zentrumsferner sind - so dass auch hier der Nutzabschnitt jeden Polstücks 11 in einer Art dreieckiger Ausbuchtung A zu liegen kommt, die abermals (ggü. dem von Fig. 1 gezeigten, runden Gehäuse) eine vergrößerte Luftstrecke zwischen dem Polstück 11 bzw. dessen Nutzabschnitt und dem Gehäuse 6 schafft.

## Patentansprüche

1. Vorrichtung zum induktiven Erwärmen eines relativ zu einer Achse symmetrischen Bauteilabschnitts aus elektrisch leitendem Material, insbesondere eines zu einem Werkzeugspannfutter gehörenden Hülsenabschnitts mit einer Aufnahmeöffnung zum Halten eines Werkzeugs durch Pressverbund, wobei die Vorrichtung mehrere, in Umfangsrichtung um die Symmetrieachse des bestimmungsgemäß in die Vorrichtung eingebrachten Bauteilabschnitts herum angeordnete Polstücke aus einem Magnetfluss leitenden Material umfasst, sowie eine Induktionseinrichtung zur Beaufschlagung der Polstücke mit magnetischem Fluss, und zwar derart, dass der magnetische Fluss von in Umfangsrichtung benachbarten Polstücken entgegengesetzt gerichtet ist, wobei die Vorrichtung ein Gehäuse aufweist, das die Symmetrieachse des bestimmungsgemäß eingebrachten Bauteilabschnitts umgibt, **dadurch gekennzeichnet, dass** jedes Polstück drehbar an dem Gehäuse gehalten ist, so dass jedem Polstück eine im Wesentlichen parallel zu der Symmetrieachse des Bauteilabschnitts verlaufende Zustelldrehachse zugeordnet ist, die sich von den Zustelldrehachsen der anderen Polstücke unterscheidet und um die herum das Polstück drehbar an der Vorrichtung gelagert ist, derart, dass jedes der Polstücke durch eine Drehung um die ihm zugeordnete Zustelldrehachse in Richtung auf den zu erwärmenden Oberflächenbereich des individuellen Werkstücks zugestellt werden kann.

2. Vorrichtung nach Anspruch 1 **dadurch gekennzeichnet, dass** die Vorrichtung Mittel zur Herabsetzung unerwünschten Kurzschluss-Magnetflusses zwischen benachbarten Polstücken (11) und/oder einem Polstück (11) und dem Gehäuse (6) aufweist und diese Mittel darin bestehen, dass nur ein Teil der an der Vorrichtung vorhandenen Polstücke (11) gleichzeitig aktiv mit Magnetfluss beaufschlagt wird und/oder das Gehäuse (6) zwischen Lagestellen (7) benachbarter Polstücke (11) derart in radial auswärtiger Richtung ausgebuchtet ist, sodass die Luftstrecke zwischen dem dieser Ausbuchtung (A) zugeordneten Polstück (11) und dem ausgebuchteten Abschnitt der Gehäusewand (6) vergrößert ist.

3. Vorrichtung nach Anspruch 1 oder 2, **dadurch gekennzeichnet, dass** die Vorrichtung mit einer Ausbuchtung (A) nach Maßgabe des Anspruchs 1 versehen ist und die Ausbuchtung (A) dadurch realisiert wird, dass das Gehäuse zwischen benachbarten Polstücken (11) einen Gehäuseabschnitt aufweist, der, in radialer Richtung gesehen, außerhalb eines gedachten Kreises liegt, der durch die Drehpunkte (vgl. 7) der Polstücke (11) verläuft.

4. Vorrichtung nach einem der vorhergehenden Ansprüche, **dadurch gekennzeichnet, dass** die Vorrichtung vier Polstücke (11) aufweist und so gesteuert ist, dass nur zwei gegenüberliegende Polstücke (11) gleichzeitig aktiv mit Magnetfluss beaufschlagt werden.

5. Vorrichtung nach einem der vorhergehenden Ansprüche, **dadurch gekennzeichnet, dass** die Vorrichtung drei Polstücke (11) aufweist und so gesteuert ist, dass immer nur zwei benachbarte Polstücke (11) gleichzeitig aktiv mit Magnetfluss beaufschlagt werden.

6. Vorrichtung nach einem der vorhergehenden Ansprüche, **dadurch gekennzeichnet, dass** die Vorrichtung nur zwei Polstücke (11) aufweist und so gesteuert ist, dass die beiden Polstücke (11) gleichzeitig mit Magnetfluss beaufschlagt werden.

7. Vorrichtung nach einem der vorhergehenden Ansprüche, **dadurch gekennzeichnet, dass** jedes der Polstücke mehrachsig drehbar an der Vorrichtung gelagert ist, derart, dass jedes der Polstücke durch eine Drehung um eine ihm zugeordnete Drehachse an den zu erwärmenden Oberflächenbereich des individuellen Werkstücks zugestellt werden und dann durch Drehung um eine andere ihnen jeweils zugeordnete Drehachse so geneigt werden kann, dass es sich innig an die Oberfläche des zu erwärmenden Bauteilabschnitts anlegt.

8. Vorrichtung nach einem der vorhergehenden Ansprüche, **dadurch gekennzeichnet, dass** jedes der Polstücke mittels eines Kugelgelenks an der Vorrichtung gelagert ist.

9. Vorrichtung nach einem der vorhergehenden Ansprüche, **dadurch gekennzeichnet, dass** die Höhe eines Polstücks von seiner Spitze hin zu seiner Zustell-Drehachse zunimmt.

10. Vorrichtung nach einem der vorhergehenden Ansprüche, **dadurch gekennzeichnet, dass** der Bereich der Polstücke, der bestimmungsgemäß an den zu erwärmenden Bauteilabschnitten der verschiedenen Bauteile zur Anlage kommt, konvex gekrümmt ist.

11. Vorrichtung zur Erwärmung von Werkzeugspannfuttern, nach einem der vorhergehenden Ansprüche, **dadurch gekennzeichnet, dass** der Oberflächenbereich der Polstücke, der bestimmungsgemäß an den zu erwärmenden Hülsenabschnitten der verschiedenen Werkzeugspannfutter zur Anlage kommt, aus einer Anzahl im Wesentlichen in Richtung von der Polstück-Spitze hin zur Zustellachse aneinander gereihter, diskreter Kontaktflächen besteht, von denen jede so angeordnet und gestaltet ist, dass sie zumindest in Linienkontakt mit dem Hülsenabschnitt zumindest eines der bestimmungsgemäß von der Vorrichtung zu erwärmenden, unterschiedlichen Werkzeugspannfutter bringbar ist.

12. Vorrichtung nach einem der vorhergehenden Ansprüche, **dadurch gekennzeichnet, dass** die Polstücke in Zustellrichtung vorgespannt sind, so dass sie sich, sobald sie in gelüfteter Position freigegeben werden, selbsttätig an den jeweils zu erwärmenden Bauteilabschnitt anlegen.

13. Vorrichtung nach Anspruch 12 in Verbindung mit Anspruch 7, **dadurch gekennzeichnet, dass** die Lagerung und Vorspannung der Polstücke jeweils so ausgelegt sind, dass sich die Polstücke unter der Wirkung der Vorspannung selbsttätig an das jeweilige Werkstück anlegen und dabei erforderlichenfalls nach dem ersten Anlegen an das Werkstück unter der Wirkung der Vorspannung zusätzlich so gegenüber dem Werkstück verschwenken, dass sich der Kontaktbereich zwischen dem zu erwärmenden Bauteilabschnitt und dem Polstück noch vergrößert.

14. Vorrichtung nach einem der vorhergehenden Ansprüche, **dadurch gekennzeichnet, dass** sämtliche Polstücke mit einem Aktuator, vorzugsweise in Form eines verdrehbar an der Vorrichtung gelagerten Steuerkranzes, gekoppelt sind, mittels dessen sie gemeinsam in eine gelüftete Position gedreht werden können.

15. Vorrichtung nach einem der vorhergehenden Ansprüche, **dadurch gekennzeichnet, dass** sämtliche Polstücke elektromotorisch, pneumatisch oder, mittels einer oder mehrerer elektrischer Zug- oder Druckmagneten automatisiert in eine gelüftete Position gedreht werden können, vorzugsweise indem der Aktuator gemäß Anspruch 13 elektromotorisch, pneumatisch oder magnetisch betätigt wird.

16. Vorrichtung nach einem der vorhergehenden Ansprüche, **dadurch gekennzeichnet, dass** die Vorrichtung einen Messwertaufnehmer umfasst, der die Position, in der die Polstücke am jeweiligen zu erwärmenden Werkstück anliegen, misst, vorzugsweise indem der Drehwinkel mindestens eines Polstücks gemessen wird, direkt oder über die Messung der Position des Aktuators gemäß Anspruch 13.

17. Vorrichtung nach einem der vorhergehenden Ansprüche, **dadurch gekennzeichnet, dass** die Vorrichtung mindestens einen Messwertaufnehmer umfasst, dessen aktueller Messwert ein Maß für eine momentan im Bereich des zu erwärmenden Bauteilabschnitts erreichte Temperatur ist, wobei der Messwertaufnehmer vorzugsweise ein berührungslos messender Temperatursensor ist und im Regelfall auf einen Bereich des zu erwärmenden Bauteilabschnitts gerichtet ist.

18. Vorrichtung nach einem der vorhergehenden Ansprüche, **dadurch gekennzeichnet, dass** die Vorrichtung eine Kühleinrichtung aufweist, mittels derer das Wiederabkühlen des erwärmten Bauteilabschnitts beschleunigt wird, wobei die Kühleinrichtung vorzugsweise Wasser, Pressluft, gekühlte oder verflüssigte Gase als Kühlmittel verwendet, das idealerweise über eine Mehrzahl von Düsen austritt und die Oberfläche des erwärmten Bauteilabschnitt im Wesentlichen gleichmäßig kühlt.

19. Vorrichtung nach Anspruch 18, **dadurch gekennzeichnet, dass** das verbrauchte Kühlmittel im Wesentlichen abgesaugt wird, wobei als Kühlmittel verwendetes Wasser derart fein verteilt auf den erwärmten Bauteilabschnitt aufgesprüht wird, dass ein wesentlicher Teil der zur Kühlung eingesetzten Wassermenge verdampft und dann abgesaugt wird.

20. Vorrichtung nach einem der Ansprüche 18 oder 19, **dadurch gekennzeichnet, dass** die Vorrichtung eine Einrichtung zum Auffangen und Ableiten von nach unten ablaufendem oder abtropfendem Kühlwasser umfasst.

21. Vorrichtung nach einem der Ansprüche 18 bis 20, **dadurch gekennzeichnet, dass** die Polstücke vom Kühlmittel durchströmte Kanäle aufweisen, die vorzugsweise so angelegt sind, dass das Kühlmittel erst die Polstücke und von dort aus den erwärmten Bauteilabschnitt kühlt.

22. Vorrichtung nach Anspruch 21, **dadurch gekennzeichnet, dass** die vom Kühlmittel durchströmten Kanäle in den Polstücken quer zu den Polstücken verlaufen, derart, dass das Kühlmittel auf den dem erwärmten Bauteilabschnitt abgewandten Rückseiten der Polstücke in die Polstücke eintritt und auf den dem erwärmten Bauteilabschnitt zugewandten Vorderseiten der Polstücke aus diesen austritt, wobei jedes Polstück vorzugsweise mit mehreren nebeneinander angeordneten Kühlkanälen versehen ist, idealerweise derart, dass im Wesentlichen der gesamte bestimmungsgemäß unmittelbar mit zu erwärmenden Bauteilabschnitten in Kontakt bringbare Bereich jedes Polstücks innerhalb einer kühlmitteldurchflossenen Zone liegt.

23. Vorrichtung nach Anspruch 21 oder 22, **dadurch gekennzeichnet, dass** auf die dem erwärmten Bauteilabschnitt abgewandten Rückseiten der Polstücke jeweils eine Verteilerkammer aufgebracht, vorzugsweise dichtend aufgeklebt, ist, die über eine die Drehbewegungen der Polstücke nicht wesentlich behindernde Zuleitung zu gegebener Zeit mit Kühlmittel gespeist wird und dann ihrerseits die Kühlmitteleintrittsöffnungen an der Rückseite der Polstücke speist.

24. Vorrichtung nach einem der vorhergehenden Ansprüche, **dadurch gekennzeichnet, dass** die magnetfelderzeugenden Spulen und/oder die die Polstücke beweglich haltenden Lager gegen Eindringen von Kühlmittel abgedichtet sind, vorzugsweise jeweils in Form einer beweglichen Dichtungseinrichtung, wie etwa eines Faltenbalges, auf deren vor Kühlmittelzutritt geschützter Rückseite die Spule und/oder das Lager des Polstücks angeordnet sind, und die einen Ausschnitt aufweist, durch den hindurch das Polstück dichtend umgriffen in den mit Kühlmittel beaufschlagten Bereich des zu erwärmenden Bauteilabschnitts ragt.

25. Vorrichtung nach Anspruch 24, **dadurch gekennzeichnet, dass** die Dichtungseinrichtung als einstückiger, in Umfangsrichtung im Wesentlichen geschlossener Dichtungsbalg ausgeführt ist, in den für jedes Polstück ein Faltenbalg nach Maßgabe das Anspruchs 22 eingearbeitet ist.

26. Automatisierte Werkzeugspannvorrichtung mit einer elektronischen Steuerung und einer Vorrichtung nach einem der vorhergehenden Ansprüche, **dadurch gekennzeichnet, dass** die Werkzeugpannvorrichtung einen Messwertaufnehmer umfasst, der die Position, in der die Polstücke an der Hülsenpartie des jeweiligen Werkzeugspannfutters anliegen, misst und in Abhängigkeit von der gemessenen Position die individuelle Heizzeit und/oder die Heizleistung und vorzugsweise auch den individuellen Kühlmittelfluss und/oder Zeit der Kühlmittelapplikation der Werkzeugspannvorrichtung einstellt.

27. Automatisierte Werkzeugspanneinrichtung nach Anspruch 26, **dadurch gekennzeichnet, dass** die Werkzeugspannvorrichtung mindestens einen Messwertaufnehmer umfasst, dessen aktueller Messwert ein Maß für eine momentan im Bereich des zu erwärmenden Bauteilabschnitts erreichte Temperatur ist und dessen Messwert die Heizzeit und/oder Heizleistung beeinflusst.

## Claims

1. A device for inductively heating a component section symmetrical relative an axis, made of electrically conductive material, in particular a sleeve section associated with a tool clamping chuck, which sleeve section comprises a receiver opening for supporting a tool through press fit, wherein the device comprises plural pole pieces made of a material conducting magnetic flux and disposed in circumferential about the symmetry axis of the component section inserted into the device as intended, and an induction device for loading the pole pieces with magnetic flux, and thus, so that the magnetic flux of pole pieces adjacent in circumferential direction is oriented in opposite direction, wherein the device comprises an housing which surrounds the symmetry axis of the component section inserted as intended, **characterized in that** each pole piece is rotatably supported at the housing, so that an feed rotation axis extending in parallel to the axis of symmetry of the component section is associated with each pole piece, which axis is different from the feed rotation axes of the other pole pieces and about which axis the pole piece is rotatably supported at the device, so that each of the pole pieces can be fed towards the surface portion to be heated of the particular work piece through a rotation about the feed rotation axis associated with said pole piece.

2. The device according to claim 1, **characterized in that** the device comprises means for reducing undesired short magnetic flux between two adjacent pole pieces (11) and/or a pole piece (11) and the housing (6) and said means are comprised of only one portion of the pole pieces (11) provided at the device being actively loaded with magnetic flux simultaneously and/or the housing (6) being bulged in radially outward direction between support locations (7) of adjacent pole pieces (11), so that the air distance between the pole piece (11) associated with said outward bulge (A) and the bulged out section of the housing wall (6) is increased.

3. The device according to claim 1 or 2, **characterized in that** the device is provided with a bulge (A) in concordance with claim 1 and the bulge (A) is provided **in that** the housing comprises a housing section between adjacent pole pieces (11), which housing section viewed in radial direction, is disposed outside of an imaginary circle which extends through the rotation points (see. 7) of the pole pieces (11).

4. The device according to any one of the preceding claims, **characterized in that** the device comprises four pole pieces (11) and it is controlled so that only two opposite pole pieces (11) are actively loaded with magnetic flux simultaneously.

5. The device according to any one of the preceding claims, **characterized in that** the device comprise three pole pieces (11) and it is configured, so that always only two adjacent pole pieces (11) are actively loaded with magnetic flux simultaneously.

6. The device according to any one of the preceding claims, **characterized in that** the device only comprises two pole pieces (11) and it is controlled so that the two pole pieces (11) are loaded with magnetic flux simultaneously.

7. The device according to any one of the preceding claims, **characterized in that** each of the pole pieces is supported at the device rotatable about plural axes, so that each of the pole pieces are fed towards the surface portion to be heated of the particular work piece through a rotation about a rotation axis associated with said pole piece, and so that said pole pieces are tilted through a rotation about another rotation axis respectively associated therewith, so that it closely and conformally contacts the surface of the component section to be heated.

8. The device according to any one of the preceding claims, **characterized in that** each of the pole pieces is supported at the device by means of a ball joint.

9. The device according to any one of the preceding claims, **characterized in that** the height of a pole piece increases from its tip towards its feed rotation axis.

10. The device according to any one of the preceding claims, **characterized in that** the portion of the pole pieces, which conformally contacts the component sections to be heated of the different components as intended, has a convex curvature.

11. The device for heating tool clamping chucks, according to any one of the preceding claims, **characterized in that** the surface portion of the pole pieces which conformally contacts the sleeve sections to be heated of the various tool clamping chucks as intended, is comprised of a plurality of discrete contact surfaces which are disposed in series substantially in the direction from the tip of the pole piece towards the feed axis, each of the discrete contact surfaces disposed and configured so that they are brought at least into linear contact with the sleeve section of at least one of the different tool clamping chucks to be heated by the device as intended.

12. The device according to any one of the preceding claims, **characterized in that** the pole pieces are preloaded in feed direction, so that they automatically conformally contact the respective component section to be heated, as soon as they are released from a lifted off position.

13. The device according to claim 12 in connection with claim 7, **characterized in that** the pole pieces are preloaded in feed direction, so that they automatically conformally contact the respective component section to be heated, as soon as they are released from a lifted off position, wherein the support and the preload of the pole pieces are respectively configured, so that the pole pieces automatically conformally contact the respective work piece under the effect of the preload and thus so that they additionally pivot relative to the work piece under the effect of the preload after the first contact with the work piece if required, so that the contact portion between the component section to be heated and the pole piece is increased even further.

14. The device according to any one of the preceding claims, **characterized in that** all pole pieces are coupled with an actuator, preferably in the form of a control sprocket rotatably disposed at the device, by means of which they are jointly rotated into a lifted off position.

15. The device according to any one of the preceding claims, **characterized in that** all pole pieces are automatically rotated into a lifted off position electromotorically, pneumatically or by means of plural electrical pull- or push magnets, preferably by actuating the actuator according to claim 13 electromotorically, pneumatically or magnetically.

16. The device according to any one of the preceding claims, **characterized in that** the device comprises a sensor which measures the position in which the pole pieces contact the respective work piece to be heated, preferably by measuring the rotation angle of at least one pole piece directly or through measuring the position of the actuator according to claim 13.

17. The device according to any one of the preceding claims, **characterized in that** the device comprises at least one sensor whose current measurement value is a measure for a temperature momentarily reached in the portion of the component section to be heated, wherein the sensor is preferably a temperature sensor measuring contactless and typically oriented towards a portion of the component section to be heated.

18. The device according to any one of the preceding claims, **characterized in that** the device comprises a cooling facility by means of which the recooling of the heated component section is accelerated, wherein the cooling facility preferably uses water, compressed air, cooled or liquefied gases as coolants which ideally exits through a plurality of nozzles and which cools the surface of the heated component section substantially uniformly.

19. The device according to claim 18, **characterized in that** the used coolant is substantially scavenged, wherein water which is used as coolant is sprayed onto the heated component section finely distributed, so that a substantial portion of the water volume used for cooling evaporates and is subsequently scavenged.

20. The device according to any one of claims 18 or 19, **characterized in that** the device comprises a facility for capturing and scavenging cooling water running off or dripping off in downward direction.

21. The device according to any one of claims 18 to 20, **characterized in that** the pole pieces comprise channels flowed through by coolant which are preferably configured, so that the coolant first cools the pole pieces and cools the heated component section from there.

22. The device according to claim 21, **characterized in that** the channels flowed through by the coolant extend in the pole pieces transversal to the pole pieces, so that the coolant enters into the pole pieces on the back sides of the pole pieces facing away from the heated component section and exits from the pole pieces on the front side of the pole pieces facing the heated component section, wherein each pole piece is preferably provided with plural cooling channels disposed next to one another, ideally so that substantially the entire portion of each pole piece which is brought into direct contact as intended with the component sections to be heated, is disposed within a zone flowed through by coolant.

23. The device according to claim 21 or 22, **characterized in that** a respective plenum is applied, preferably sealingly glued onto the back sides of the pole pieces, which back sides face away from the component section to be heated, which plenum is fed with coolant at the appropriate time through a conduit which does not substantially impede the rotation of the pole pieces and which in turn feeds the coolant inlets at the back side of the pole pieces.

24. The device according to any one of the preceding claims, **characterized in that** the coils generating the magnetic field and/or the bearings moveably supporting the pole pieces are sealed against the penetration of coolant, preferably respectively in the form of a moveable seal device, e.g. a bellows, on whose back side which is protected against coolant access the coil and/or the bearing of the pole piece are disposed and which seal device comprises a cutout through which the pole piece extends into the portion of the component section to be heated which is loaded with coolant, so that the cutout sealingly envelopes said pole piece.

25. The device according to claim 24, **characterized in that** the seal device is configured as an integral seal bellows substantially closed in circumferential direction into which a gaiter in concordance with claim 22 is fabricated for each pole piece.

26. An automated tool clamping device with an electronic control and a device according to any one of the preceding claims, **characterized in that** the automated tool clamping device comprises a sensor which measures the position in which the pole pieces conformally contact the sleeve section of the respective tool clamping chuck and which adjusts the particular heating time period and/or the heating power and preferably the particular cooling flow and/or the timing of the coolant application of the tool clamping device as a function of the measured position.

27. An automated tool clamping device according to claim 26, **characterized in that** the tool clamping device comprises at least one sensor whose current measurement value is a measure for a temperature momentarily reached in the portion of the component section to be heated and whose measurement value influences the heating time period and/or the heating power.

## Revendications

1. Dispositif pour le chauffage par induction d'un tronçon de composant, symétrique par rapport à un axe, en matériau électriquement conducteur, en particulier d'un tronçon de douille faisant partie d'un mandrin de serrage d'outil avec un orifice de réception destiné à retenir un outil par ajustement serré, le dispositif comprenant plusieurs pièces polaires en matériau conduisant le flux magnétique qui sont disposées dans la direction circonférentielle tout autour de l'axe de symétrie du tronçon de composant mis en place comme il convient dans le dispositif, ainsi qu'un équipement d'induction destiné à alimenter les pièces polaires en flux magnétique, et cela de telle sorte que le flux magnétique de pièces polaires voisines dans la direction circonférentielle est dirigé en sens opposé, le dispositif présentant un boîtier qui entoure l'axe de symétrie du tronçon de composant mis en place comme il convient, **caractérisé en ce que** chaque pièce polaire est retenue sur le boîtier de façon à pouvoir tourner de telle sorte qu'à chaque pièce polaire il est affecté un axe de rotation d'approche, sensiblement parallèle à l'axe de symétrie du tronçon de composant, qui se distingue des axes de rotation d'approche des autres pièces polaires et tout autour duquel la pièce polaire est supportée en rotation sur le dispositif de telle sorte que chacune des pièces polaires peut être rapprochée par une rotation autour de l'axe de rotation d'approche qui lui est affecté en direction de la zone superficielle à chauffer de la pièce individuelle.

2. Dispositif selon la revendication 1, **caractérisé en ce que** le dispositif présente des moyens pour réduire le flux magnétique en court-circuit indésirable entre des pièces polaires (11) et/ou entre une pièce polaire (11) et le boîtier (6), et **en ce que** ces moyens consistent **en ce que** seule une partie des pièces polaires (11) présentes sur le dispositif est alimentée de façon simultanément active en flux magnétique et/ou **en ce que** le boîtier (6), entre des emplacements (7) de pièces polaires (11) voisines, est indenté radialement vers l'extérieur de telle sorte que l'entrefer entre la pièce polaire (11) affectée à cette indentation (A) et le tronçon indenté de la paroi de boîtier (6) est augmenté.

3. Dispositif selon la revendication 1 ou 2, **caractérisé en ce que** le dispositif est muni d'une indentation (A) conformément à la revendication 1, et **en ce que** l'indentation (A) est réalisée par le fait que le boîtier entre des pièces polaires (11) voisines présente un tronçon de boîtier qui, vu dans la direction radiale, est à l'extérieur d'un cercle imaginaire qui passe par les points de rotation (voir 7) des pièces polaires (11).

4. Dispositif selon une des revendications précédentes, **caractérisé en ce que** le dispositif présente quatre pièces polaires (11) et est commandé de telle sorte que seules deux pièces polaires (11) opposées sont alimentées en flux magnétique simultanément de façon active.

5. Dispositif selon une des revendications précédentes, **caractérisé en ce que** le dispositif présente trois pièces polaires (11) et est commandé de telle sorte qu'à tout instant seules deux pièces polaires (11) opposées sont alimentées en flux magnétique simultanément de façon active.

6. Dispositif selon une des revendications précédentes, **caractérisé en ce que** le dispositif ne présente que deux pièces polaires (11) et est commandé de telle sorte que les deux pièces polaires (11) sont alimentées simultanément en flux magnétique.

7. Dispositif selon une des revendications précédentes, **caractérisé en ce que** chacune des pièces polaires est supportée en rotation multiaxiale sur le dispositif de telle sorte que chacune des pièces polaires peut, par une rotation autour d'un axe de rotation qui lui est affecté, être rapprochée de la zone superficielle à chauffer de la pièce individuelle et être inclinée ensuite, par rotation autour d'un autre axe de rotation qui lui est respectivement affecté, de telle sorte qu'elle appuie intérieurement contre la surface du tronçon de composant à chauffer.

8. Dispositif selon une des revendications précédentes, **caractérisé en ce que** chacune des pièces polaires est supportée sur le dispositif au moyen d'un joint à rotule.

9. Dispositif selon une des revendications précédentes, **caractérisé en ce que** la hauteur d'une pièce polaire augmente à partir de sa pointe vers son axe de rotation d'approche.

10. Dispositif selon une des revendications précédentes, **caractérisé en ce que** la zone des pièces polaires, qui vient s'appuyer comme il convient contre les tronçons de composant à chauffer des différents composants, est courbée de façon convexe.

11. Dispositif pour le chauffage de mandrins de serrage d'outil selon une des revendications précédentes, **caractérisé en ce que** la zone superficielle des pièces polaires, qui vient s'appuyer comme il convient contre les tronçons de douille à chauffer des différents mandrins de serrage d'outil, se compose d'un certain nombre de surfaces de contact discrètes qui se succèdent sensiblement depuis la pointe de pièce polaire vers l'axe d'approche et dont chacune est disposée et configurée de telle sorte qu'elle peut être mise au moins en contact linéaire avec le tronçon de douille d'au moins un des différents mandrins de serrage d'outil devant être chauffés comme il convient par le dispositif.

12. Dispositif selon une des revendications précédentes, **caractérisé en ce que** les pièces polaires sont prétendues dans la direction d'approche de telle sorte que, lorsqu'elles sont libérées dans la position ventilée, elles viennent s'appuyer d'elles-mêmes contre le tronçon de composant à chauffer respectivement.

13. Dispositif selon la revendication 12 en liaison avec la revendication 7, **caractérisé en ce que** le support et la pré-tension des pièces polaires sont respectivement conçus de telle sorte que, sous l'action de la pré-tension, les pièces polaires viennent s'appuyer d'elles-mêmes contre la pièce respective et, ce faisant, si nécessaire après le premier appui contre la pièce sous l'action de la pré-tension, pivotent en plus par rapport à la pièce de telle façon que la zone de contact entre le tronçon de composant à chauffer et la pièce polaire s'agrandit encore.

14. Dispositif selon une des revendications précédentes, **caractérisé en ce que** toutes les pièces polaires sont couplées à un actionneur, de préférence sous forme de couronne de commande supportée sur le dispositif de façon à pouvoir tourner, au moyen duquel elles peuvent être tournées en commun dans une position ventilée.

15. Dispositif selon une des revendications précédentes, **caractérisé en ce que** toutes les pièces polaires peuvent être tournées de façon automatisée dans une position ventilée de façon électromotrice, pneumatique ou au moyen d'un ou de plusieurs électroaimants de traction ou de poussée, de préférence par le fait que l'actionneur selon la revendication 13 est activé de façon électromotrice, pneumatique ou magnétique.

16. Dispositif selon une des revendications précédentes, **caractérisé en ce que** le dispositif comprend un capteur qui mesure la position occupée par les pièces polaires sur la pièce respective à chauffer, de préférence en mesurant l'angle de rotation d'au moins une pièce polaire, directement ou par le biais de la mesure de la position de l'actionneur selon la revendication 13.

17. Dispositif selon une des revendications précédentes, **caractérisé en ce que** le dispositif comprend au moins un capteur dont la valeur de mesure actuelle est une mesure d'une température atteinte momentanément dans la zone du tronçon de composant à chauffer, le capteur étant de préférence un capteur de température à mesure sans contact, généralement dirigé vers une zone du tronçon de composant à chauffer.

18. Dispositif selon une des revendications précédentes, **caractérisé en ce que** le dispositif présente un équipement de refroidissement au moyen duquel le nouveau refroidissement du tronçon de composant chauffé est accéléré, l'équipement de refroidissement utilisant de préférence de l'eau, de l'air comprimé, des gaz refroidis ou liquéfiés en tant que réfrigérant, lequel sort idéalement par le biais d'une pluralité de buses et refroidit de façon sensiblement uniforme la surface du tronçon de composant chauffé.

19. Dispositif selon la revendication 18, **caractérisé en ce que** le réfrigérant consommé est sensiblement aspiré, l'eau utilisée en tant que réfrigérant étant pulvérisée de façon finement répartie sur le tronçon de composant chauffé de telle sorte qu'une partie importante de la quantité d'eau mise en oeuvre pour le refroidissement est vaporisée et puis aspirée.

20. Dispositif selon une des revendications 18 ou 19, **caractérisé en ce que** le dispositif comprend un équipement pour capter et dévier l'eau de refroidissement s'écoulant ou s'égouttant vers le bas.

21. Dispositif selon une des revendications 18 à 20, **caractérisé en ce que** les pièces polaires présentent des canaux parcourus par le réfrigérant qui sont aménagés de préférence de telle sorte que le réfrigérant refroidit d'abord les pièces polaires et puis, en partant de là, le tronçon de composant chauffé.

22. Dispositif selon la revendication 21, **caractérisé en ce que** les canaux parcourus par le réfrigérant dans les pièces polaires sont placés transversalement aux pièces polaires de telle sorte que le réfrigérant entre dans les pièces polaires sur les faces arrière des pièces polaires qui sont éloignées du tronçon de composant chauffé et sort des pièces polaires sur les faces avant des pièces polaires qui sont tournées vers le tronçon de composant chauffé, chaque pièce polaire étant de préférence munie de plusieurs canaux de refroidissement juxtaposés, idéalement de telle façon que sensiblement la totalité de la zone de chaque pièce polaire pouvant être mise en contact comme il convient directement avec des tronçons de composant à chauffer est située à l'intérieur d'un secteur parcouru par le réfrigérant.

23. Dispositif selon la revendication 21 ou 22, **caractérisé en ce que** respectivement une chambre de distribution est mise en place, de préférence collée de façon étanche, sur les faces arrière des pièces polaires qui sont éloignées du tronçon de composant chauffé, et elle est alimentée le moment venu en réfrigérant par le biais d'une conduite d'amenée qui ne gêne pas sensiblement les mouvements de rotation des pièces polaires, et elle alimente ensuite de son côté les orifices d'entrée de réfrigérant sur la face arrière des pièces polaires.

24. Dispositif selon une des revendications précédentes, **caractérisé en ce que** les bobines produisant le champ magnétique et/ou les supports retenant les pièces polaires de façon mobile sont rendus étanches à l'intrusion de réfrigérant, de préférence respectivement sous la forme d'un dispositif d'étanchéité mobile, comme par exemple un soufflet, sur la face arrière, protégée contre l'entrée de réfrigérant, duquel la bobine et/ou le support de la pièce polaire sont disposés, et qui présente une découpe à travers laquelle la pièce polaire passe, en étant entourée de façon étanche, pour entrer dans la zone, alimentée en réfrigérant, du tronçon de composant à chauffer.

25. Dispositif selon la revendication 24, **caractérisé en ce que** le dispositif d'étanchéité est réalisé en tant que dispositif d'étanchéité à soufflet d'un seul tenant, sensiblement fermé dans la direction circonférentielle, et dans lequel, pour chaque pièce polaire, un soufflet peut être inséré conformément à la revendication 22.

26. Dispositif automatisé de serrage d'outil avec une commande électronique et un dispositif selon une des revendications précédentes, **caractérisé en ce que** le dispositif de serrage d'outil comprend un capteur qui mesure la position dans laquelle les pièces polaires sont placées contre la partie de douille du mandrin de serrage d'outil respectif, et règle, en fonction de la position mesurée, la durée de chauffe individuelle et/ou la puissance de chauffe, et de préférence également le débit individuel de réfrigérant et/ou la durée de l'application du réfrigérant du dispositif de serrage d'outil.

27. Dispositif automatisé de serrage d'outil selon la revendication 26, **caractérisé en ce que** le dispositif de serrage d'outil comprend au moins un capteur dont la valeur de mesure actuelle est une mesure d'une température atteinte momentanément dans la zone du tronçon de composant à chauffer, et dont la valeur de mesure influence la durée de chauffe et/ou la puissance de chauffe.
